(19) Europäisches Patentamt
European Patent Office
Office européen des brevets

(11) **EP 2 823 519 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **13708089.1**

(22) Anmeldetag: **27.02.2013**

(51) Int Cl.:
*H01M 2/16* [(2006.01)]   *H01M 10/42* [(2006.01)]
*H01M 2/14* [(2006.01)]   *H01M 10/0525* [(2010.01)]

(86) Internationale Anmeldenummer:
**PCT/EP2013/000574**

(87) Internationale Veröffentlichungsnummer:
**WO 2013/131624 (12.09.2013 Gazette 2013/37)**

(54) **HOCHPORÖSE SEPARATOR-FOLIE MIT PARTIELLER BESCHICHTUNG**

HIGHLY POROUS SEPARATOR-FILM WITH PARTIAL COATING

SÉPÉRATEUR-FILM À HAUTE POROSITÉ AVEC UN RÉVÊTEMENT PARTIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2012 DE 102012004161**

(43) Veröffentlichungstag der Anmeldung:
**14.01.2015 Patentblatt 2015/03**

(73) Patentinhaber: **Treofan Germany GmbH & Co. KG 66539 Neunkirchen (DE)**

(72) Erfinder:
• **BUSCH, Detlef**
  **66740 Saarlouis (DE)**

• **SCHMITZ, Bertram**
  **F-57200 Sarreguemines (FR)**
• **KLEIN, Dominic**
  **66450 Bexbach (DE)**

(74) Vertreter: **Mai Dörr Besier**
**European Patent Attorneys**
**European Trademark Attorneys**
**Patentanwälte**
**Kreuzberger Ring 64**
**65205 Wiesbaden (DE)**

(56) Entgegenhaltungen:
**WO-A1-2008/038971     WO-A2-2011/076375**
**US-A1- 2010 203 396     US-A1- 2010 285 348**

## Beschreibung

Die vorliegende Erfindung betrifft eine beschichtete, poröse Folie und ihre Verwendung als Separator.

Moderne Geräte erfordern eine Energiequelle, wie Batterien oder Akkus, die eine räumlich unabhängige Nutzung ermöglichen. Batterien haben den Nachteil, dass man sie entsorgen muss. Daher werden vermehrt Akkumulatoren (sekundäre Batterien) eingesetzt, die man mit Hilfe von Ladegeräten am Stromnetz immer wieder aufladen kann. Herkömmliche Nickel-Cadmium-Akkus (NiCd-Akkus) können beispielsweise bei sachgerechtem Gebrauch eine Lebensdauer von ca. 1000 Ladezyklen erreichen. In Hochenergie- oder Hochleistungssystemen werden heute zunehmend Lithium-, Lithiumionen-, Lithium-Polymer-, und Erdalkali-Batterien als Akkumulatoren eingesetzt.

Batterien und Akkumulatoren bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Ein Batterieseparator hat die Aufgabe Kathode und Anode in Batterien, beziehungsweise negative und positive Elektrode in Akkumulatoren, räumlich zu trennen. Der Separator muss eine Barriere sein, welche die beiden Elektroden elektrisch voneinander isoliert, um interne Kurzschlüsse zu vermeiden. Gleichzeitig muss der Separator jedoch durchlässig für Ionen sein, damit die elektrochemischen Reaktionen in der Zelle ablaufen können.

Ein Batterieseparator muss dünn sein, damit der Innenwiderstand möglichst gering ist und eine hohe Packungsdichte erzielt werden kann. Nur so sind gute Leistungsdaten und hohe Kapazitäten möglich. Zusätzlich ist es erforderlich, daß die Separatoren den Elektrolyten aufsaugen und bei gefüllten Zellen den Gasaustausch gewährleisten. Während früher u. a. Gewebe verwendet wurden, sind heutzutage überwiegend feinporige Materialien, wie Vliesstoffe und Membranen, im Einsatz.

In Lithium-Batterien ist das Auftreten von Kurzschlüssen ein Problem. Bei thermischer Belastung kann es in den Lithium-Ionen-Batterien zu einem Schmelzen des Batterieseparators und damit zu einem Kurzschluss mit verheerenden Folgen kommen. Ähnliche Gefahren bestehen, wenn die Lithium-Batterien mechanisch beschädigt oder durch mangelhafte Elektronik der Ladegeräte überladen werden.

Um die Sicherheit der Lithium-Ionen-Batterien zu erhöhen, wurden in der Vergangenheit Abschalt-Separatoren entwickelt (Shut Down Membranen). Diese speziellen Separatoren schließen ihre Poren in kürzester Zeit bei einer bestimmten Temperatur, die deutlich unterhalb des Schmelzpunktes oder des Zündpunktes von Lithium liegt. Damit werden die katastrophalen Folgen eines Kurzschlusses bei den Lithium-Batterien weitgehend verhindert.

Gleichzeitig ist jedoch für die Separatoren auch eine hohe mechanische Festigkeit gewünscht, welche durch Materialien mit hohen Schmelzetemperaturen gewährleistet wird. So sind beispielsweise Polypropylen-Membranen auf Grund der guten Durchstoßfestigkeit vorteilhaft, aber der Schmelzpunkt des Polypropylens liegt mit ca. 164°C sehr nahe am Flammpunkt des Lithiums (170°C).

Hochenergiebatterien basierend auf der Lithiumtechnologie werden in Anwendungen eingesetzt, bei denen es darauf ankommt eine möglichst große Menge an elektrischer Energie auf geringstem Raum verfügbar zu haben. Dies ist beispielsweise bei Traktionsbatterien für den Einsatz in Elektrofahrzeugen der Fall, aber auch in anderen mobilen Anwendungen in denen maximale Energiedichte bei geringem Gewicht gefordert ist, wie z.B. Luft- und Raumfahrt. Augenblicklich werden in Hochenergiebatterien Energiedichten von 350 bis 400 Wh/L bzw. 150 bis 200 Wh/kg erzielt. Diese hohen Energiedichten erreicht man durch den Einsatz von speziellem Elektrodenmaterial (z.B. Li-CoO2) und den sparsameren Einsatz von Gehäusematerialien. So sind in Li-Batterien des Pouch-Zellen-Typs die einzelnen Batterieeinheiten nur noch durch eine Folie voneinander getrennt.

Auf Grund dieser Tatsache sind in diesen Zellen auch höhere Anforderungen an den Separator gestellt, da bei einem internen Kurzschluss und Überhitzung die explosionsartigen Verbrennungsreaktionen auf die benachbarten Zellen übergreifen.

Separatormaterialien für diese Anwendungen müssen folgende Eigenschaften besitzen: Sie müssen möglichst dünn sein, um einen geringen spezifischen Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird und sie müssen absolut sicher sein. Dies bedeutet dass im Falle einer Überhitzung oder mechanischen Beschädigung positive und negative Elektrode auf jeden Fall getrennt bleiben müssen um weitere chemische Reaktionen, die zum Brand oder Explosion der Batterien führen, zu verhindern.

Es ist im Stand der Technik bekannt Polypropylenmembranen mit weiteren Schichten zu kombinieren, die aus Materialien mit niedrigerem Schmelzpunkt aufgebaut sind, beispielsweise aus Polyethylen. Im Falle einer Überhitzung durch Kurzschluss oder andere äußere Einflüsse schmilzt die Polyethylenschicht und verschließt die Poren der porösen Polypropylenschicht, wodurch der Ionenfluß und somit Stromfluß in der Batterie unterbrochen wird. Allerdings schmilzt bei weiterem Temperaturanstieg (> 160°C) auch die Polypropylenschicht und ein interner Kurzschluss durch Berührung von Anode und Kathode und die daraus resultierenden Probleme wie Selbstentzündung und Explosion können nicht mehr verhindert werden. Zusätzlich ist die Haftung der Polyethylenschichten auf Polypropylen problematisch, so dass diese Schichten nur durch Laminierung kombiniert werden können oder nur ausgewählte Polymere dieser beiden Klassen coextrudiert werden können. Diese Separatoren bieten in Hochenergieanwendungen nur unzureichende Sicherheit. Eine derartige Folie ist in WO 2010048395 beschrieben.

US2011171523 beschreibt einen hitzeresistenten Separator der über ein Lösemittelverfahren gewonnen wird. Dabei werden in einem ersten Schritt anorganische Partikel (Kreide, Silikate oder Aluminiumoxid) in den Rohstoff (UHMW-PE) zusammen mit einem Öl eincompoundiert. Diese Mischung wird dann durch eine Düse zu einer Vorfolie extrudiert, aus der Vorfolie wird dann das Öl mittels eines Lösungsmittels heraus gelöst, um die Poren zu kreieren und diese wird Folie dann anschließend zum Separator verstreckt. In diesem Separator gewährleisten dann auch bei einer starken Überhitzung die anorganische Partikel die Trennung von Anode und Kathode in der Batterie.

Dieses Verfahren hat allerdings den Nachteil, dass die Partikel zur Schwächung der mechanischen Eigenschaften des Separators beitragen und zum Anderen durch Agglomerate der Partikel Fehler und ungleiche Porenstruktur entstehen kann.

US2007020525 beschreibt einen keramischen Separator, der durch Verarbeitung von anorganischen Partikeln mit einem Polymer basierten Binder erhalten wird. Auch dieser Separator gewährleistet, dass bei einer starken Überhitzung Anode und Kathode in der Batterie getrennt bleiben. Aber das Herstellungsverfahren ist aufwendig und die mechanischen Eigenschaften des Separators unzureichend.

In DE19838800 wird ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit. Diese Separatoren sind aber aufgrund des Trägermaterials sehr dick und haben sich in der Herstellung als problematisch erwiesen, da eine fehlerfrei, großflächige Beschichtung nur mit erheblichem technischen Aufwand realisiert werden kann.

In DE10208277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil nach der Lehre dieser Anmeldung besonderer Wert auf möglichst große Poren des Separators gelegt wurde. Mit den dort beschriebenen, bis zu 5 $\mu$m großen Partikeln ist es aber nicht möglich, 10 bis 40 $\mu$m dicke Separatoren herzustellen, da hier nur einige wenige Partikel übereinander zu liegen kämen. Dadurch würde der Separator zwangsläufig eine große Fehler- und Störstellendichte (z. B. Löcher, Risse, etc.) aufweisen.

WO 2005038946 beschreibt einen hitzebeständigen Separator aus einem Träger aus gewebten oder nicht-gewebten (nonwoven) Polymerfasern, mit einer auf und in diesem Träger befindlichen porösen anorganischen Keramikschicht, die durch einen Kleber mit dem Träger verbunden ist. Auch hier ist die Gewährleistung einer fehlerfreien Beschichtung sowie die resultierende Dicke und Gewicht als problematisch anzusehen.

Die Beschichtung gereckter Polypropylenfolien mit anorganischen Materialien wurde bisher nur wenig verfolgt, da bekannt ist, dass bereits die Haftung von organischen Coatingschichten nur unzureichend ist und deshalb Haftvermittler hinzugezogen werden müssen. Diese Problematik wird z.B. in US4794136 beschrieben. Hier wird der Einsatz eines Melamin/Acrylat-Primers als Haftvermittler zwischen Polyolefinischen Folien und PVDC-Coatings beschrieben. Haftvermittler neigen aber dazu die Poren zu verschließen und so den Widerstand unnötig in die Höhe treiben. Das Abplatzen des Coatings während der Batteriefertigung stellt ein zusätzliches Sicherheitsrisiko dar. Des Weiteren müssen die Haftvermittler in den organischen Elektrolyten, die in Li-Batterien eingesetzt werden unlöslich sein, um u.a. die Leitfähigkeit des Elektrolyten nicht negativ zu beeinflussen.

Die EP1173330 betrifft die Verwendung einer boPP-Folie als Trägerfolie bei der Herstellung von Keramikkondensatoren. Die Mehrschichtfolie ist aus einer Basisschicht und mindestens einer Deckschicht (A) aufgebaut, wobei die Deckschicht (A) ein Propylenpolymeres und mindestens ein unverträgliches Polyolefin enthält, und wobei das unverträgliche Polyolefin ein LDPE, HDPE, MDPE, Ethylen-Propylen-Copolymere oder ein Cycloolefinpolymer oder ein syndiotaktisches Polymer ist. Die Folie wird auf einer Oberfläche mit einer keramischen Beschichtung versehen, diese Beschichtung wird getrocknet und anschließend von der Trägerfolie getrennt. Bei dieser Erfindung macht man sich eine geringe Haftung der keramischen Beschichtung auf der boPP Folie zu Nutze. Im Rahmen der vorliegenden Erfindung wurde überraschend gefunden, dass Polypropylen Separatoren mit einer bestimmten Oberflächenstruktur ohne Einsatz von Primern partiell beschichtet werden können, wobei die Partikel unter Einsatz einer geringen Menge oder sogar ohne Binder eine Haftung in der Oberflächenstruktur aufweisen und eine für die Weiterverarbeitung ausreichende Haftung zeigen. Die Haftung gegenüber einer Vielzahl von Beschichtungen ist hier auch ohne den Einsatz eines Primers gegeben.

Polyolefin Separatoren können heute nach verschiedenen Verfahren hergestellt werden: Füllstoffverfahren; Kaltverstreckung, Extraktionsverfahren und ß-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. Die großen Füllstoffmengen von bis zu 40 Gew.-%, welche zur Erzielung von hohen Porositäten erforderlich sind, beeinträchtigen jedoch die mechanische Festigkeit trotz hoher Verstreckung erheblich, so dass diese Produkte als Separatoren in einer Hochenergiezelle nicht eingesetzt werden können.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es können sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden. Nachteilig ist in diesem Falle der ökologisch und ökonomisch bedenkliche Extraktionsschritt.

Ein älteres aber erfolgreiches Verfahren beruht auf einer Verstreckung der Polymermatrix bei sehr niedrigen Temperaturen (Kaltverstreckung). Hierzu wird die Folie zunächst extrudiert und anschließend zur Erhöhung des kristallinen Anteils für einige Stunden getempert. Im nächsten Verfahrensschritt erfolgt die KaltVerstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeit in Richtung ihrer Verstreckung, im Allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von ß-Nukleierungsmitteln zu Polypropylen. Durch das ß-Nukleierungsmittel bildet das Polypropylen beim Abkühlen der Schmelze sogenannte ß-Kristallite in hohen Konzentrationen. Bei der anschließenden LängsVerstreckung erfolgt eine Umwandlung der ß-Phase in die alpha-Modifikation des Polypropylens. Da sich diese unterschiedlichen Kristallformen in der Dichte unterscheiden, entstehen auch hier zunächst viele mikroskopische Fehlstellen, die durch die Verstreckung zu Poren aufgerissen werden. Die nach diesem Verfahren hergestellten Folien haben gute Porositäten und gute mechanische Festigkeiten in Längs- und Querrichtung und eine sehr gute Wirtschaftlichkeit. Im Vergleich zu den monoaxial, kalt gestreckten Separatoren bilden sie eine für die Erfindung wesentliche Oberflächenstruktur auf. Diese Folien werden nachstehend auch ß-poröse Folien genannt. Zur Verbesserung der Porosität kann eine höhere Orientierung in Längsrichtung vor der Querstreckung eingebracht werden.

Die Aufgabe der vorliegenden Erfindung bestand daher darin, einerseits eine poröse flexible Folie zur Verfügung zu stellen, die eine hohe Porosität und Durchlässigkeit aufweist und über ausgezeichnete mechanische Festigkeit verfügt und andererseits mit hitzebeständigen Werkstoffen beschichtet ist und die im Falle einer Überhitzung Anode und Kathode nach Schmelzen der porösen Folie vor direktem Kontakt schützt. Diese Folie soll dann auch in Hochenergiebatterien ausreichende Sicherheit gewährleisten. Des Weiteren soll die poröse flexible Folie zusätzlich einen ausreichenden Schutz gegen interne Kurzschlüsse bei der Verwendung als Separatormembran bieten.

Überraschenderweise wurde gefunden, dass anorganisch, vorzugsweise keramisch beschichtete Separatorfolien auf Basis von porösen Polyolefinfolien, die die geforderte Sicherheit liefern, herstellbar sind, wenn die keramische Beschichtung auf eine biaxial orientierte, ein- oder mehrschichtige poröse Folie aufgebracht ist, deren Porosität durch Umwandlung von ß-kristallinem Polypropylen beim Verstrecken der Folie erzeugt wird, wobei die poröse Folie mindestens eine poröse Schicht umfasst und diese Schicht mindestens ein Propylenpolymer und ß-Nukleierungsmittel enthält und wobei die Folie vor der Beschichtung einen Gurley Wert von <1000s aufweist, und die Beschichtung in so geringen Mengen aufgebracht wird, dass sich keine kontinuierliche Schicht auf der Oberfläche der Folie ausbildet.

Gegenstand der vorliegenden Erfindung ist somit eine biaxial orientierte, ein- oder mehrschichtige poröse Folie gemäss Anspruch 1.

Separatorfolie

Die erfindungsgemäße anorganische, vorzugsweise keramisch teil-beschichtete Separatorfolien auf Basis von porösen Polyolefinfolien umfasst eine poröse, biaxial orientierte Folie aus Polypropylen (BOPP) mit sehr hoher Porosität und hoher Durchlässigkeit von <1000 s (Gurley Wert). Der Einsatz derartiger BOPP Folien als Separatorfolien ist bereits bekannt. Diese Folien enthalten vorzugsweise ß-Nukleierungsmittel. Die erfindungsgemäße Porosität der Folie wird durch Umwandlung von ß-kristallinem Polypropylen beim Verstrecken der Folie erzeugt, wobei mindestens ein ß-Nukleierungsmittel in der Folie vorliegt.

Derartige poröse BOPP Folien sind auch für den Einsatz als Separator im Doppelschicht-Kondensatoren (DSK) besonders geeignet.

Die erfindungsgemäß zur Beschichtung eingesetzten porösen Folien weisen nach einer Längsverstreckung eine moderate Orientierung in Längsrichtung auf und werden anschließend in Querrichtung orientiert, so dass sie als BOPP Folie eine hohe Porosität und eine sehr hohe Durchlässigkeit aufweisen und die Spleißneigung in Längsrichtung abgebaut wird. Dabei ist es vorteilhaft, diese Querstreckung mit einer sehr langsamen Streckgeschwindigkeit von vorzugsweise unter 40%/s durchzuführen.

Die erfindungsgemäß zur Beschichtung eingesetzten Folien können ein- oder mehrschichtig aufgebaut sein. Die Herstellung solcher einschichtigen oder mehrschichtigen porösen Polypropylenfolie bei welchem Propylenpolymer und ß-Nukleierungsmittel in einem Extruder aufgeschmolzen und durch eine Flachdüse auf eine Abzugswalze extrudiert wird, ist bereits in DE-A-102010018374 detailliert beschrieben. Der Schmelzfilm kühlt auf der Abzugswalze unter Ausbildung von ß-Kristalliten ab und verfestigt sich. Anschließend wird diese Folie in Längsrichtung und danach unmittelbar in Querrichtung verstreckt.

Anstelle der unmittelbaren Querverstreckung kann die erfindungsgemäß zur Beschichtung eingesetzten Folien auch nach der Verstreckung in Längsrichtung aufgewickelt werden und zu einem späteren Zeitpunkt in einem zweiten Querstreckverfahren abgewickelt, auf Querstrecktemperatur erwärmt und in Querrichtung verstreckt werden, wobei die Verfahrensgeschwindigkeit des Längsstreckverfahrens größer oder kleiner als die Verfahrensgeschwindigkeit des Querstreckverfahrens ist.

Die erfindungsgemäß zur Beschichtung eingesetzten porösen BOPP Folien umfassen mindestens eine poröse Schicht, die aus Propylenpolymeren, nämlich Propylenhomopolymeren und Propylenblockcopolymeren, aufgebaut ist und ß-Nukleierungsmittel enthält. Gegebenenfalls können zusätzlich andere Polyolefine in geringen Mengen enthalten sein, soweit sie die Porosität und andere wesentliche Eigenschaften nicht nachteilig beeinflussen. Des Weiteren enthält die mikroporöse Schicht gegebenenfalls zusätzlich übliche Additive, beispielsweise Stabilisatoren und/oder Neutralisationsmittel in jeweils wirksamen Mengen.

Geeignete Propylenhomopolymere enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% ($^{13}$C-NMR; Triaden Methode) eingesetzt werden. Diese Rohstoffe sind als HIPP-Polymere (Hoch isotaktische Polypropylene) oder HCPP (Hoch Kristalline Polypropylene) im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer $^{13}$C-NMR-Isotaktizität von 90 bis <96%, die gleichfalls eingesetzt werden können).

Propylen-Blockcopolymere haben einen Schmelzpunkt von über 140 bis 170°C, vorzugsweise von 145 bis 165°C, insbesondere 150 bis 160°C und einen Schmelzebereich der bei über 120°C, vorzugsweise in einem Bereich von 125 - 140°C beginnt. Der Comonomer-, vorzugsweise Ethylen-Gehalt liegt beispielsweise zwischen 1 und 20 Gew.-%, bevorzugt 1 und 10 Gew.-%. Der Schmelzflußindex der Propylen-Blockcopolymere liegt im Allgemeinen in einem Bereich von 1 bis 20 g/10min, vorzugsweise 1 bis 10 g/10min.

Gegebenenfalls kann die poröse Schicht zusätzlich andere Polyolefine enthalten, soweit sie die Eigenschaften, insbesondere die Porosität und die mechanischen Festigkeiten, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger,

In einer bevorzugten Ausführungsform ist die poröse Schicht nur aus Propylenhomopolymer und/oder Propylenblockcopolmyer und ß-Nukleierungsmittel, sowie gegebenenfalls Stabilisator und Neutralisationsmittel aufgebaut.

In einer bevorzugten Ausführungsform umfasst die erfindungsgemäß zur Beschichtung eingesetzte poröse BOPP Folien keine Polyolefine, die Mittels sogenannter Metallocen-Katalysatoren hergestellt wurden.

Als ß-Nukleierungsmittel sind für die poröse Schicht grundsätzlich alle bekannten Zusatzstoffe geeignet, welche die Bildung von ß-Kristallen des Polypropylens beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt im Bereich von 155 - 170°C, vorzugsweise 158 - 162 °C liegt. Durch eine bestimmte Temperaturführung kann beim Abkühlen der Schmelze ein geringer Anteil an ß-kristalliner Phase erzeugt werden, welche gegenüber der monoklinen α-Modifikation mit 145 - 152°C, vorzugsweise 148 - 150°C einen deutlich niedrigeren Schmelzpunkt aufweist. Im Stand der Technik sind Additive bekannt, die zu einem erhöhten Anteil der ß-Modifikation beim Abkühlen des Polypropylens führen, beispielsweise γ-Quinacridone, Dihydroquinacridine oder Calciumsalze der Phtalsäure.

Für die Zwecke der vorliegenden Erfindung werden vorzugsweise hochaktive ß-Nukleierungsmittel eingesetzt, welche beim Abkühlen einer Propylenhomopolymerschmelze einen ß-Anteil von 40-95%, vorzugsweise von 50-85% (DSC) erzeugen. Der ß-Anteil wird aus dem DSC der abgekühlten Propylenhomopolymerschmelze bestimmt. Bevorzugt ist beispielsweise ein zweikomponentiges ß-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide, insbesondere N,N-Dicyclohexyl-2,6-Naphtalendicarboxamide, sind geeignete ß-Nukleierungsmittel. Des weiteren ist der Einsatz der in der WO2011047797A1, auf welche hiermit ausdrücklich Bezug genommen wird, beschriebenen nanoskaligen Nukleierungsmittel, wie beispielsweise nano-Calciumpimelat und nano-Calciumsuberat, bevorzugt. Nanoskalig bedeutet im Sinne der vorliegenden Erfindung ein mittlerer Teilchendurchmesser im Bereich von 1 bis 500nm.

Zusätzlich zu den ß-Nukleierungsmitteln ist die Einhaltung eines bestimmten Temperaturbereiches und Verweilzeiten bei diesen Temperaturen beim Abkühlen des unverstreckten Schmelzefilms für die Erzielung eines hohen Anteils an ß-kristallinem Polypropylen wichtig. Die Abkühlung des Schmelzefilms erfolgt vorzugsweise bei einer Temperatur von 60 bis 140°C, insbesondere 80 bis 130°C, beispielsweise 85 bis 128°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min. Die Verweilzeit beträgt im Allgemeinen 20 bis 300s; vorzugsweise 30 bis 200s.

Die poröse Schicht enthält 50 bis 85 Gew.-%, Propylenhomopolymere 15 bis 50 Gew.-% Propylenblockcopolymer und 50 - 10.000 ppm mindestens eines ß-Nukleierungsmittels, bezogen auf das Gewicht der porösen Schicht.

In einer weiteren Ausführung der Erfindung können weitere Polyolefine in der porösen Schicht anwesend sein. Hierdurch wird der Anteil des Propylenhomopolymeren oder des Blockcopolymeren entsprechend reduziert. Als weitere Polyolefine kommen z.B. Polyethylene zum Einsatz Im Allgemeinen wird die Menge der zusätzlichen Polymeren, insbesondere auf Basis von Polyethylen, in der Schicht 0 bis <40 Gew.-%, vorzugsweise 5 bis 30 Gew.-%, insbesondere 10 bis 25 Gew.-% betragen. In gleicher Weise gilt, dass der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Schicht übliche Stabilisatoren und Neutralisationsmittel, sowie gegebenenfalls weitere Additive, in den üblichen geringen Mengen von unter 2 Gew.-% enthalten. Die poröse

Schicht enthält 50 bis 85 Gew.-%, vorzugsweise 60 bis 75 Gew.-%, Propylenhomopolymere und 15 bis 50 Gew.-% Propylenblockcopolymere, vorzugsweise 25 bis 40 Gew.-%, und 50 bis 10.000 ppm mindestens eines ß-Nukleierungsmittels, bezogen auf das Gewicht der Schicht, sowie gegebenenfalls die bereits erwähnten Additive wie Stabilisatoren und Neutralisationsmittel. Auch hier gilt, daß weitere Polyolefine in einer Menge von 0 bis <10 Gew.-%, vorzugsweise 0 bis 5 Gew.-%, insbesondere 0,5 bis 2 Gew.-% enthalten sein können, und der Anteil des Propylenhomopolymeren oder des Blockcopolymeren dann entsprechend reduziert wird.

Besonders bevorzugte Ausführungsformen der erfindungsgemäßen porösen Folie enthalten 50 bis 10.000ppm, vorzugsweise 50 bis 5000ppm, insbesondere 50 bis 2000ppm nanoskaliges Calcium-Pimelat oder Calcium-Suberat als ß-Nukleierungsmittel in der porösen Schicht, wobei nanoskalige Calcium-Pimelate oder Calcium-Suberate bevorzugt sind.

Die poröse Folie kann ein oder mehrschichtig sein. Die Dicke der Folie liegt im Allgemeinen in einem Bereich von 10 bis 100 $\mu$m, vorzugsweise 15 bis 60 $\mu$m, beispielsweise 15 bis 40$\mu$m. Die poröse Folie kann auf ihrer Oberfläche mit einer Corona, Flamm- oder Plasmabehandlung versehen werden, um die Befüllung mit Elektrolyten zu verbessern.

In einer mehrschichtigen Ausführungsform umfasst die Folie weitere poröse Schichten, welche wie vorstehend beschrieben aufgebaut sind, wobei die Zusammensetzung der verschiedenen porösen Schicht nicht unbedingt identisch sein muss. Für mehrschichtige Ausführungsformen beträgt die Dicke der einzelnen Schichten im allgemeinen 2 bis 50$\mu$m.

Die Dichte der zu beschichtende poröse Folie liegt im Allgemeinen in einem Bereich von 0,1 bis 0,6 g/cm$^3$, vorzugsweise 0,2 bis 0,5 g/cm$^3$. Die aufgetragene partielle Beschichtung verändert die Dichte der porösen Folie im wesentlichen nicht, bzw. nur in einem geringen Maße von ca. 1 bis 5%

Der Bubble Point der zu beschichtenden Folie sollte nicht über 350nm, vorzugsweise im Bereich von 20 bis 350nm, insbesondere von 40 bis 300nm, besonders bevorzugt 50 bis 300nm, liegen und der mittlere Porendurchmesser sollte im Bereich 50 bis 100 nm, bevorzugt im Bereich 60 - 80 nm liegen.

Die Porosität der zu beschichtenden porösen Folie (BOPP Folie) liegt im Allgemeinen in einem Bereich von 30 % bis 80%, vorzugsweise 50% bis 70%.

Die zu beschichtenden porösen Folie (BOPP Folie) hat eine definierte Rauigkeit Rz (DIN 4768, cut-off 2,5mm) von 0,02 $\mu$m bis 6$\mu$m, vorzugsweise 0,3 bis 6$\mu$m, besonders bevorzugt 0,5 bis 5$\mu$m, insbesondere 0,5 bis 3,5$\mu$m, aufweisen.

Die zu beschichtenden porösen Folie (BOPP Folie) weist vorzugsweise eine ß-Aktivität von 35% bis 99% auf.

In einer weiteren Ausführungsform weist die zu beschichtende poröse BOPP Folie eine Abschaltfunktion auf. Die Abschaltfunktion kann in die poröse Folie integriert sein, so dass die poröse Folie neben den vorstehend genannten Materialien zusätzlich die nachfolgend genannten Abschaltmaterialien aufweist. Oder die Abschaltfunktion liegt in Form einer konkreten Abschaltschicht auf der zu beschichtenden poröse BOPP Folie vor. In diesem Fall ist die zu beschichtende poröse BOPP Folie mindestens zweilagig, wobei das Abschaltmaterial zusammen mit den Polymeren der porösen Folie die Abschaltschicht bildet. Insofern die Abschaltschicht als konkrete Abschaltschicht vorliegt, beträgt die Dicke dieser separaten Abschaltschicht vorzugsweise 3 bis 25 $\mu$m, insbesondere 5 bis 15 $\mu$m. Gegebenenfalls kann die poröse Folie auch zwei Abschaltschichten umfassen, die aus einer Mischung aus den Polymeren der porösen Folie und des Abschaltmaterials aufgebaut sind.

Als Abschaltmaterialien sind Polyethylene wie HDPE oder MDPE bevorzugt. Diese sind im Allgemeinen mit dem Polypropylen unverträglich und bilden im Gemisch mit Polypropylen eine separate Phase. Das Vorliegen einer separaten Phase zeigt sich beispielsweise in einer DSC Messung durch einen separaten Schmelzepeak im Bereich der Schmelztemperatur des Polyethylens, im Allgemeinen in einem Bereich von 115 - 140°C.

Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm$^3$/g, vorzugsweise 120 bis 280 cm$^3$/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,97 g/cm$^3$. Der Schmelzpunkt, gemessen mit DSC (Maximum der Schmelzkurve, Aufheizgeschwindigkeit 20 °C/min), liegt zwischen 120 und 145°C, vorzugsweise 125 - 140°C.

Geeignetes MDPE hat im Allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm$^3$. Der Schmelzpunkt, gemessen mit DSC (Maximum der Schmelzkurve, Aufheizgeschwindigkeit 20 °C/min), liegt zwischen 115 und 130 °C, vorzugsweise 120-125°C.

Zusätzlich ist es erfindungsvorteilhaft, dass das Polyethylen ein engen Schmelzbereich aufweist. Dies bedeutet, dass in einem DSC des Polyethylens der Beginn des Schmelzebereiches und das Ende des Schmelzebereiches maximal 10K, vorzugsweise 3 bis 8K auseinander liegen. Als Beginn des Schmelzebereiches gilt hier der extrapolierte Onset, das Ende des Schmelzebereiches ist entsprechend das extrapolierte Ende der Schmelzkurve (Aufheizgeschwindigkeit 10K/min)

Dass die Abschaltfunktion bildende Material, insbesondere das Polyethylen, wird in der erfindungsgemäßen porösen BOPP Folie zusammen mit den Polymeren der porösen Folie eingesetzt, vorzugsweise in Mengen von mindestens 5 Gew.-% bezogen auf die vorhandenen Propylenpolymeren und/oder Propylenblockcopolymeren vorhanden, besonders bevorzugt in Mengen von mindestens 10 Gew.-%.

Die mit einer Abschaltfunktion versehene poröse Folie weist die vorstehend beschriebenen bevorzugten Bereiche hinsichtlich Porosität, Durchlässigkeit, ß-Nukleierung, Querstreckung, Polymerzusammensetzung, Herstellung, Dichte, Bubble Point, Oberflächen-Rauigkeitund/oder ß-Aktivität auf. Diese sind ebenfalls explizit Bestandteil der Erfindung und ihrer Beschreibung für diese Ausführungsform, ohne dass diese an dieser Stelle explizit wiederholt werden.

Anorganische, vorzugsweise keramische Beschichtung

Die erfindungsgemäße biaxial orientierte, ein- oder mehrschichtige poröse Folie, mit oder ohne Abschaltfunktion, weist zumindest auf einer Seite der Oberfläche eine partielle anorganische, vorzugsweise keramische, Beschichtung auf. In diesem Zusammenhang bedeutet der Begriff "partiell", dass nicht die gesamte Oberfläche einer Seite der Folie mit der anorganischen, vorzugsweise keramischen, Beschichtung versehen ist. Üblicherweise wird lediglich ein Bereich von bis zu 95% der gesamten Oberfläche einer Seite der Folie mit der anorganischen, vorzugsweise keramischen, Beschichtung versehen, vorzugsweise werden 10- bis 95%, besonders bevorzugt 20 bis 95%, insbesondere 25 bis 90%, mit der anorganischen, vorzugsweise keramischen, Beschichtung versehen. Die partielle Beschichtung ermöglicht einerseits den ausreichenden Schutz gegen interne Kurzschlüsse und andererseits eine ausreichende Durchlässigkeit der beschichteten porösen Folie von <1200 s Gurley,

In einer bevorzugten Ausführungsform sind beide Seiten der Folie mit der partiellen anorganischen, vorzugsweise keramischen, Beschichtung versehen.

Die Beschichtung, bzw. das Material der partiellen Beschichtung ist elektrisch isolierend.

Die erfindungsgemäße anorganische, vorzugsweise keramische, Beschichtung umfasst keramische Partikel, worunter auch anorganische Partikel verstanden werden. Die Partikelgröße ausgedrückt als D50 Wert liegt im Bereich zwischen 0,005 und 10 $\mu$m, vorzugweise im Bereich 0,01 bis 7 $\mu$m. Die Auswahl der genauen Partikelgröße erfolgt in Abhängigkeit von der Dicke der anorganischen, vorzugsweise keramischen, Beschichtung. Hier hat sich gezeigt, dass der D50 Wert nicht größer sein sollte als 50% der Dicke der anorganischen, vorzugsweise keramischen, Beschichtung, vorzugsweise nicht größer sein sollte als 33% der Dicke der anorganischen, vorzugsweise keramischen, Beschichtung, insbesondere nicht größer sein sollte als 25% der Dicke der anorganischen, vorzugsweise keramischen, Beschichtung. In einer besonders bevorzugten Ausführungsform der Erfindung ist der D90 Wert nicht größer als 50% der Dicke der anorganischen, vorzugsweise keramischen, Beschichtung, vorzugsweise nicht größer als 33% der Dicke der anorganischen, vorzugsweise keramischen, Beschichtung, insbesondere nicht größer als 25% der Dicke der anorganischen, vorzugsweise keramischen, Beschichtung.

Als anorganische, vorzugsweise keramische, Partikel im Sinne der vorliegenden Erfindung werden alle natürlichen oder synthetischen Mineralien verstanden, sofern sie die vorstehend genannten Partikelgrößen aufweisen. Die anorganischen, vorzugsweise keramischen, Partikel unterliegen hinsichtlich der Partikelgeometrie keiner Einschränkung, bevorzugt sind jedoch sphärische Partikel. Des Weiteren können die anorganischen, vorzugsweise keramischen, Partikel kristallin, teilkristallin (min. 30% Kristallinität) oder nicht-kristallin vorliegen.

Als keramische Partikel im Sinne der vorliegenden Erfindung werden Materialien auf Basis von Silikat-Rohstoffen, oxidische Rohstoffe, insbesondere Metalloxide, und/oder nicht-oxidische und nicht-metallische Rohstoffe verstanden.

Geeignete Silikat-Rohstoffen umfassen Materialien die einen SiO4-Tetraeder aufweisen, beispielsweise Schicht- oder Gerüst-Silikate.

Geeignete oxidische Rohstoffe, insbesondere Metalloxide, sind beispielweise Aluminiumoxide, Zirkonoxide, Bariumtitanat, Bleizirkoniatitanate, Ferrite und Zinkoxid.

Geeignete nicht-oxidische und nicht-metallische Rohstoffe sind beispielweise Siliziumcarbid, Siliziumnitrid, Aluminiumnitrid, Bornitrid, Titanborid und Molybdänsilicid.

Weitere erfindungsgemäß eingesetzten Partikel bestehen aus elektrisch isolierenden Materialien, bevorzugt ein nicht elektrisch leitendes Oxid der Metalle Al, Zr, Si, Sn, Ti und/oder Y. Die Herstellung solcher Partikel ist beispielsweise in DE-A-10208277 detailliert beschrieben.

Innerhalb der anorganischen, vorzugsweise keramischen, Partikel sind insbesondere Partikel auf Basis von Oxiden des Siliciums mit der Summenformel $SiO_2$, sowie gemischte Oxide mit der Summenformel $AlNaSiO_2$ und Oxide des Titans mit der Summenformel $TiO_2$ bevorzugt, wobei diese in kristalliner, amorpher oder gemischter Form vorliegenden können. Bevorzugt sind die anorganischen, vorzugsweise keramischen, Partikel polykristalline Materialien, insbesondere solche deren Kristallinität mehr als 30% beträgt.

Die Auftragsmenge der partiellen, anorganischen, vorzugsweise keramischen, Beschichtung beträgt vorzugsweise 0,1g/m$^2$ bis 20 g/m$^2$, insbesondere 0,5 g/m$^2$ bis 10g/m$^2$, bezogen auf die Partikel oder im Falle das ein Binder eingesetzt wird, Partikel plus Binder nach Trocknung.

Die Auftragsmenge an anorganischen, vorzugsweise keramischen, Partikeln beträgt vorzugsweise 0,08g/m$^2$ bis 18 g/m$^2$, insbesondere 0,4 g/m$^2$ bis 8 g/m$^2$, bezogen auf Partikel nach Trocknung.

Die erfindungsgemäße anorganische, vorzugsweise keramische, Beschichtung umfasst anorganische, vorzugsweise keramische, Partikel die vorzugsweise eine Dichte im Bereich von 1,5 bis 8 g/cm$^3$, vorzugsweise 2 bis 5 g/cm$^3$, aufweisen.

Die erfindungsgemäße anorganische, vorzugsweise keramische, Beschichtung umfasst anorganische, vorzugsweise keramische, Partikel die vorzugsweise eine Härte von min. 2 auf der Moh's Skala aufweisen.

Die erfindungsgemäße anorganische, vorzugsweise keramische, Beschichtung umfasst anorganische, vorzugsweise keramische, Partikel die vorzugsweise eine Schmelztemperatur von mindestens 160°C, insbesondere mindestens 180°C, ganz besonders bevorzugt mindestens 200°C, aufweisen. Darüber hinaus sollen die genannten Partikel bei den genannten Temperaturen auch keine Zersetzung erfahren. Die vorgenannten Angaben können mittels bekannter Methoden, z.B. DSC (Differential Scanning Calorimetrie) oder TG (Thermogravimetrie) bestimmt werden.

Die erfindungsgemäße anorganische, vorzugsweise keramische, Beschichtung umfasst anorganische, vorzugsweise keramische, Partikel die vorzugsweise eine Druckfestigkeit von mindestens 100kPa, besonders bevorzugt von mindestens 150kPa, insbesondere von mindestens 250kPa, aufweisen. Druckfestigkeit bedeutet, dass min. 90% der vorhandenen Partikel durch den einwirkenden Druck nicht zerstört wurden.

Bevorzugt sind Beschichtungen die eine Dicke von 0,5$\mu$m bis 10$\mu$m und anorganische, vorzugsweise keramische, Partikel im Bereich zwischen 0,02 und 5$\mu$m (d50 Wert), vorzugsweise im Bereich 0,05 bis 2$\mu$m (d50 Wert), aufweisen.

Besonders bevorzugt sind Beschichtungen die (i) eine Dicke von 0,5$\mu$m bis 10$\mu$m, (ii) anorganische, vorzugsweise keramische, Partikel im Bereich zwischen 0,02 und 5$\mu$m (d50 Wert), vorzugweise im Bereich 0,05 bis 2$\mu$m (d50 Wert), aufweisen, deren Druckfestigkeit min. 100kPa, besonders bevorzugt von min. 150kPa, insbesondere min. 250kPa, beträgt.

Besonders bevorzugt sind Beschichtungen die (i) eine Dicke von 0,05$\mu$m bis 10$\mu$m, (ii) anorganische, vorzugsweise keramische, Partikel im Bereich zwischen 0,02 und 5$\mu$m (d50 Wert), vorzugweise im Bereich 0,05 bis 2$\mu$m (d50 Wert), aufweisen, deren Druckfestigkeit min. 100kPa, besonders bevorzugt von min. 150kPa, insbesondere min. 250kPa, beträgt und der D50 Wert nicht größer als 50% der Dicke der anorganischen, vorzugsweise keramischen, Beschichtung ist, vorzugsweise nicht größer als 33% der Dicke der anorganischen, vorzugsweise keramischen, Beschichtung, insbesondere nicht größer als 25% der Dicke der anorganischen, vorzugsweise keramischen, Beschichtung.

Die erfindungsgemäße anorganische, vorzugsweise keramische, Beschichtung kann neben den genannten anorganischen, vorzugsweise keramischen, Partikeln noch mindestens einen endverfestigten Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, enthalten.

Die erfindungsgemäß eingesetzten Binder sollten elektrisch isolierend sein, d.h. keine elektrische Leitfähigkeit aufweisen. Elektrisch isolierend bzw. keine elektrische Leitfähigkeit bedeutet, dass diese Eigenschaften in geringem Umfang vorhanden sein können, aber die Werte für die unbeschichtete Folie nicht erhöhen.

Die Auftragsmenge an endverfestigtem Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, beträgt vorzugsweise $0,05g/m^2$ bis $10g/m^2$, insbesondere $0,1g/m^2$ bis $5g/m^2$. [nur Binder, getrocknet]. Bevorzugte Bereich für Binder auf Basis von Polyvinylendichlorid (PVDC) sind $0,05g/m^2$ bis $10g/m^2$, vorzugsweise $0,1g/m^2$ bis $5g/m^2$, [nur Binder, getrocknet]

Im Falle der Verwendung eines Binders umfasst die erfindungsgemäße anorganische, vorzugsweise keramische, Beschichtung bezogen auf Binder und anorganische, vorzugsweise keramische, Partikel in getrocknetem Zustand, 98 Gew.-% bis 50 Gew.-% anorganische, vorzugsweise keramische, Partikel und 2 Gew.-% bis 50 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, wobei innerhalb der Binder endverfestigte Binder auf Basis von Polyvinylendichlorid (PVDC) bevorzugt sind. Des Weiteren kann die erfindungsgemäße anorganische, vorzugsweise keramische, Beschichtung noch in geringem Umfang Additive aufweisen, die zur Handhabung der Dispersion notwendig sind.

Die erfindungsgemäße anorganische, vorzugsweise keramische, Beschichtung wird mittels bekannter Beschichtungstechnologien, beispielsweise durch Rakeln oder Aufsprühen oder Drucken, als Pulver oder als Dispersion auf die poröse BOPP Folie aufgetragen.

In einer Variante wird die anorganische, vorzugsweise keramische, Beschichtung als Dispersion aufgetragen. Diese Dispersionen umfassen neben den erfindungsgemäßen anorganischen, vorzugsweise keramischen, Partikeln, mindestens einen der genannten Binder, vorzugsweise Binder auf Basis von Polyvinylendichlorid (PVDC) und/oder Wasser und/oder gegebenenfalls organische Substanzen, welche die Dispersionsstabilität verbessern oder die Benetzbarkeit zur porösen BOPP Folie erhöhen. Bei den organischen Substanzen handelt es sich um flüchtige organische Substanzen, wie ein oder mehrwertige Alkohole, insbesondere um solche, deren Siedetemperatur 140°C nicht übersteigt. Aufgrund der Verfügbarkeit sind Isopropanol, Propanol und Ethanol besonders bevorzugt.

Der Auftrag der anorganischen, vorzugsweise keramischen, Partikel ist beispielsweise in DE-A-10208277 detailliert beschrieben.

Bevorzugte Dispersionen umfassen:

(i) 20 Gew.-% bis 90 Gew.-%, besonders bevorzugt 30 Gew.-% bis 80 Gew.-% an anorganischen, vorzugsweise keramischen, Partikeln,

(ii) 1 Gew.-% bis 30 Gew.-%, besonders bevorzugt 1,5 Gew.-% bis 20 Gew.-% Binder ausgewählt aus der Gruppe der Binder auf Basis von Polyvinylendichlorid (PVDC), Polyacrylate, Polymethacrylate, Polyethylenimine, Polyester, Polyamide, Polyimide, Polyurethane, Polycarbonate, Silikatbinder, gegraftete Polyolefine, Polymere aus der Klasse der halogenierten Polymere, beispielsweise PTFE, und Gemische derselben, wobei innerhalb der Binder endverfestigte Binder auf Basis von Polyvinylendichlorid (PVDC) bevorzugt sind,

(iii) gegebenenfalls 0,01 bis 3,0Gew.-%, besonders bevorzugt 0,01 Gew.-% bis 0,5 Gew.-% organische Substanzen, welche die Dispersionsstabilität verbessern oder die Benetzbarkeit zur porösen BOPP Folie erhöhen, insbesondere ein oder mehrwertige Alkohole,

(iv) gegebenenfalls 0,00001 Gew.-% bis 10 Gew.-%, besonders bevorzugt 0,001 Gew.-% bis 5 Gew.-% an weiteren Additiven, wie Dispersionsstabilisatoren und/oder Entschäumer,

(v) Wasser, so dass die Summe aller Komponenten 100 Gew.-% ergibt.

In einer weiteren Ausführungsform kann eine trockene Beschichtung der porösen Folie erfolgen. Hierbei werden die vorstehend beschriebenen Partikel direkt mit geeigneten Werkzeugen, z.B. einem Rakel, einer Walze oder ähnlichem, auf die Oberfläche der porösen Folie aufgetragen. In diesem Fall besteht die aufgetragene Beschichtung nur aus den Partikeln. Nach diesem Verfahren können vorzugsweise Partikel mit einer Teilchengröße von unter 5μm, vorzugsweise 0,001 bis 2μm aufgetragen werden, insbesondere die Silikat-basierten Partikel oder TiO2-Partikel.

Die vorliegende Erfindung betrifft weiterhin ein Verfahren zur Herstellung der erfindungsgemäßen anorganisch, vorzugsweise keramisch, beschichteten porösen BOPP Folie. Nach diesem Verfahren wird die poröse Folie nach dem an sich bekannten Flachfolien-Extrusions- oder -Coextrusionsverfahren hergestellt. Im Rahmen dieses Verfahrens wird so vorgegangen, dass die Mischung aus Propylenhomopolymer und/oder Propylenblockcopolymer und ß-Nukleierungsmittel und gegebenenfalls weiteren Polymeren (z.B. dem Material der Abschaltfunktion) der jeweiligen Schicht vermischt, in einem Extruder aufgeschmolzen und, gegebenenfalls gemeinsam und gleichzeitig, durch eine Flachdüse auf eine Abzugswalze extrudiert oder coextrudiert wird/werden, auf der sich der ein- oder mehrschichtige Schmelzefilm unter Ausbildung der ß-Kristallite verfestigt und abkühlt. Die Abkühltemperaturen und Abkühlzeiten werden so gewählt, dass ein möglichst hoher Anteil an ß-kristallinem Polypropylen in der Vorfolie entsteht. Im Allgemeinen beträgt diese Temperatur der Abzugswalze oder der Abzugswalzen 60 bis 140°C, vorzugsweise 80 bis 130°C. Die Verweilzeit bei dieser Temperatur kann variieren und sollte mindestens 20 bis 300s, vorzugsweise 30 bis 100s betragen. Die so erhaltene Vorfolie enthält im allgemeinen einen Anteil an ß-Kristalliten von 40 - 95%, vorzugsweise 50 - 85%.

Diese Vorfolie mit einem hohen Anteil an ß-kristallinem Polypropylen wird anschließend derart biaxial gestreckt, dass es bei der Verstreckung zu einer Umwandlung der ß-Kristallite in $\alpha$-kristallines Polypropylen und zur Ausbildung einer netzwerkartigen porösen Struktur kommt. Die biaxiale Streckung (Orientierung) wird im Allgemeinen aufeinanderfolgend durchgeführt werden, wobei vorzugsweise zuerst längs (in Maschinenrichtung) und dann quer (senkrecht zur Maschinenrichtung) gestreckt wird.

Für die Verstreckung in Längsrichtung wird die abgekühlte Vorfolie zunächst über eine oder mehrere Aufheizwalzen geführt, welche die Folie auf die geeignete Temperatur erwärmen. Im Allgemeinen beträgt diese Temperatur weniger als 140°C, vorzugsweise 70 bis 120°C. Das Längsstrecken erfolgt dann im allgemeinen mit Hilfe zweier entsprechend dem angestrebten Streckverhältnis verschieden schnellaufender Walzen. Das Längs-Streckverhältnis liegt dabei in einem Bereich von 2:1 bis 6:1, vorzugsweise 3:1 bis 5:1. Zur Vermeidung einer zu hohen Orientierung in Längsrichtung wird der Breiteneinsprung beim Längsstrecken gering gehalten, beispielsweise durch die Einstellung eines vergleichsweise engen Streckspaltes. Die Länge des Streckspaltes beträgt im Allgemeinen 3 bis 100mm, vorzugsweise 5 bis 50mm. Gegebenenfalls können auch fixierende Elemente, wie Breithalter zu einem geringen Breiteneinsprung beitragen. Der Einsprung sollte unter 10%, vorzugsweise 0,5 - 8%, insbesondere 1 - 5% betragen.

Nach dieser Längsverstreckung wird die Folie zunächst wieder über entsprechend temperierte Walzen abgekühlt. Anschließend erfolgt in den sogenannten Aufheizfeldern wieder eine Erwärmung auf die Querstrecktemperatur, die im Allgemeinen bei einer Temperatur von 120 -145°C liegt. Anschließend erfolgt das Querstrecken mit Hilfe eines entsprechenden Kluppenrahmens, wobei das Querstreckverhältnis in einem Bereich von 2:1 bis 9:1, vorzugsweise 3:1 - 8:1 liegt. Zur Erzielung der erfindungsgemäß hohen Porositäten erfolgt die Querstreckung mit einer moderaten bis langsamen Querstreckgeschwindigkeit von >0 bis 40%/s, vorzugsweise in einem Bereich von 0,5 bis 30%/s, insbesondere 1 bis 15%/s.

Gegebenenfalls kann nach der letzten Streckung, im Allgemeinen die Querstreckung, eine Oberfläche der Folie nach einer der bekannten Methoden corona-, plasma- oder flammbehandelt werden, sodass die Befüllung mit Elektrolyt begünstigt wird. Hierbei handelt es sich vorzugsweise um die Oberfläche der Folie, die nachfolgend nicht beschichtet wird.

Abschließend erfolgt gegebenenfalls eine Thermofixierung (Wärmebehandlung), bei welcher die Folie etwa 5 bis 500s, vorzugsweise 10 bis 300s lang bei einer Temperatur von 110 bis 150°C, vorzugsweise bei 125 bis 145°C gehalten wird, beispielsweise über Walzen oder einen Luftheizkasten. Gegebenenfalls wird die Folie unmittelbar vor oder während der Thermofixierung konvergierend gefahren, wobei die Konvergenz vorzugsweise 5 - 25%, insbesondere 8 bis 20% beträgt. Unter Konvergenz versteht man ein leichtes Zusammenfahren des Querstreckrahmens, so dass die maximale Breite des Rahmens die am Ende des Querstreckprozeßes gegeben ist größer als die Breite am Ende der Thermofixierung ist. Entsprechendes gilt selbstverständlich für die Breite der Folienbahn. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$\text{Konvergenz } [\%] = 100 \times (B_{max} - B_{Folie}) / B_{max}$$

Abschließend wird die Folie in üblicher Weise mit einer Aufwickeleinrichtung aufgewickelt.

In den bekannten sequentiellen Verfahren, bei denen Längs- und Querstreckung nacheinander in einem Verfahren durchgeführt werden, hängt nicht nur die Querstreckgeschwindigkeit von der Verfahrensgeschwindigkeit ab. Auch die Abzugsgeschwindigkeit und die Abkühlgeschwindigkeit variieren mit der Verfahrensgeschwindigkeit. Diese Parameter können somit nicht unabhängig voneinander gewählt werden. Daraus folgt, dass sich -bei ansonsten gleichen Bedingungen- bei einer langsameren Verfahrensgeschwindigkeit nicht nur die Querstreckgeschwindigkeit reduziert, sondern auch die Abkühl- bzw. Abzugsgeschwindigkeit der Vorfolie. Dies kann, muss aber nicht zwangsläufig, ein zusätzliches Problem darstellen.

In einer weiteren Ausführungsform des erfindungsgemäßen Verfahrens ist es daher vorteilhaft das Verfahren zur Herstellung der sequentiell verstreckten Folie in zwei separate Verfahren aufzuteilen, d.h. in ein erstes Verfahren, welches alle Verfahrensschritte bis einschließlich Abkühlung nach Längsstreckung umfasst, nachstehend Längsstreckverfahren genannt und in ein zweites Verfahren, welches alle Verfahrensschritte nach dem Längsstreckverfahren umfasst, nachstehend Querstreckverfahren genannt. Diese Ausführungsform des erfindungsgemäßen Verfahrens als zweistufiges Verfahren ermöglicht es die Verfahrensgeschwindigkeit des ersten Verfahrens, und damit die jeweiligen Bedingungen, insbesondere Abkühl- und Abzugsgeschwindigkeiten, sowie die Längsstreckbedingungen unabhängig von der Querstreckgeschwindigkeit zu wählen. Entsprechend kann in dem zweiten Querstreckverfahren die Querstreckgeschwindigkeit beliebig verlangsamt werden, beispielsweise durch Reduzierung der Verfahrensgeschwindigkeit oder durch die Verlängerung des Streckrahmens, ohne dass die Bildung der ß-Kristallite oder die Längsstreckbedingungen negativ beeinflusst werden. Diese Verfahrensvariante wird umgesetzt indem man das Längsstreckverfahren wie vorstehend beschrieben ausführt und nach der Abkühlung der längsgestreckten Folie diese Folie zunächst aufwickelt. Diese längsverstreckte Folie wird dann im zweiten Querstreckverfahren verwendet, d.h. in diesem zweiten Verfahren erfolgen alle Verfahrensschritte nach Abkühlung der längsgestreckten Folie wie vorstehend beschrieben. Hierbei kann jetzt die optimale Querstreckgeschwindigkeit unabhängig gewählt werden.

Unter den vorstehend genannten Verfahrensgeschwindigkeiten des Längsstreckverfahrens oder des Querstreckverfahrens oder des sequentiellen Verfahrens wird jeweils diejenige Geschwindigkeit, z.B. in m/min, verstanden, mit der die Folie bei der jeweils abschließenden Aufwickelung läuft. Je nach den Gegebenheiten kann beim Querstreckverfahren sowohl eine schneller als auch eine langsamere Verfahrensgeschwindigkeit als beim Längsstreckverfahren vorteilhaft sein.

Die Verfahrensbedingungen bei dem erfindungsgemäßen Verfahren zur Herstellung der porösen Folien unterscheiden sich von den Verfahrensbedingungen, die üblicherweise bei der Herstellung einer biaxial orientierten Folie eingehalten werden. Für die Erzielung einer hohen Porosität und Durchlässigkeit sind sowohl die Abkühlbedingungen bei der Verfestigung zur Vorfolie, als auch die Temperaturen und die Faktoren bei der Verstreckung kritisch. Zunächst muss durch entsprechend langsame und moderate Abkühlung, d.h. bei vergleichsweise hohen Temperaturen, ein hoher Anteil an ß-Kristalliten in der Vorfolie erzielt werden. Bei der anschließenden Längsverstreckung werden die ß-Kristalle in die alpha Modifikation umgewandelt, wodurch Störstellen in Form von Mikrorissen entstehen. Damit diese Störstellen in ausreichender Anzahl und in der richtigen Form entstehen muss die Längsstreckung bei vergleichsweise niedrigen Temperaturen erfolgen. Bei der Querstreckung, werden diese Störstellen zu Poren aufgerissen, so dass die charakteristische Netzwerkstruktur dieser porösen Folien entsteht.

Diese, gegenüber herkömmlichen boPP Prozessen niedrigen Temperaturen, insbesondere bei der Längsstreckung, bedingen hohe Streckkräfte, die zum einen eine hohe Orientierung in die Polymermatrix einbringen und zum anderen die Abrißgefahr erhöhen. Je höher die gewünschte Porosität, umso niedriger müssen die Temperaturen bei der Verstreckung gewählt werden und umso höher müssen die Streckfaktoren sein. Der Prozess wird daher grundsätzlich umso kritischer je höher die Porosität und Durchlässigkeit der Folie sein soll. Die Porosität kann daher über höhere Streckfaktoren oder Erniedrigung der Strecktemperatur nicht beliebig erhöht werden. Insbesondere die erniedrigte Längsstrecktemperatur führt zu einer stark beeinträchtigen Laufsicherheit der Folie, sowie zu einer unerwünschten Erhöhung der Spleißneigung. Die Porosität kann daher durch niedrigere Längsstrecktemperaturen von beispielsweise unter 70°C nicht mehr weiter verbessert werden.

Ferner ist es möglich die Porosität und Durchlässigkeit der Folie zusätzlich über die Streckgeschwindigkeit bei der Querstreckung zu beeinflussen. Eine langsame Querverstreckung erhöht die Porosität und Durchlässigkeit weiter, ohne dass es zu vermehrten Abrissen oder sonstigen Störungen während des Produktionsprozesses kommt. Die Folie weißt eine spezielle Kombination aus hoher Porosität und Durchlässigkeit, mechanischer Festigkeit, gute Laufsicherheit beim Herstellprozess und geringer Spleißneigung in Längsrichtung auf.

Nachfolgend wird auf die vorstehend hergestellte poröse BOPP Folie die erfindungsgemäße anorganische, vorzugsweise keramische, Beschichtung mittels bekannter Technologien, beispielsweise durch Rakeln oder Aufsprühen oder Drucken, in Form einer Dispersion oder als Pulver, bevorzugt einer wässrigen Dispersion, auf die poröse BOPP Folie aufgetragen. Der Auftrag kann auch mittels Walzen erfolgen, so dass die zu beschichtende Fläche über die Oberflächenmuster der Walzen eingestellt werden kann.

Die zu beschichtenden porösen Folie (BOPP Folie) hat vorzugsweise eine definierte Rauigkeit Rz (DIN 4768, cut-off 2,5mm) von 0,02 $\mu$m bis 6$\mu$m, vorzugsweise 0,3 bis 6$\mu$m.

Die zu beschichtenden porösen Folie (BOPP Folie) weist vorzugsweise eine ß-Aktivität von 35% bis 99% auf.

Insofern die zu beschichtenden porösen Folie (BOPP Folie) eine geringe Rauigkeit Rz von 0,02 bis 1$\mu$m aufweist, kann die partielle Beschichtung durch verschiedene Methoden erzeugt werden. Eine mögliche Methode ist die Verwendung von Masken bzw. Schablonen welche die Folie partiell abdecken bzw. den Auftrag nur teilweise erfolgen lassen. Eine weitere Möglichkeit die erfindungsgemäße partielle Beschichtung zu erzeugen besteht in entsprechenden Drucktechnologien, beispielsweise Ink-Jet Printing oder durch Verwendung von Walzen mit einem definierten Oberflächenmuster (Vertiefungen), durch welche die partiellen Bereiche aufgebracht werden. Bevorzugte Oberflächenmuster sind definierte geometrische Formen wie gleichmäßige n-Ecke, insbesondere solche bei denen n eine ganze Zahl von 3 bis 8 ist, Kreise oder Ovale. Die Tiefe der Muster bestimmt sich durch die gewünschte Dicke der keramischen Beschichtung.

Insofern die zu beschichtenden porösen Folie (BOPP Folie) eine Rauigkeit Rz von 0,02 bis 6 $\mu$m, insbesondere von 0,3 bis 6$\mu$m, vorzugsweise >1 bis 6$\mu$m aufweist, sammelt sich die aufgebrachte anorganische, vorzugsweise keramische, Beschichtung in den Senken der Oberfläche und glättet diese. Die vorhandene Oberflächenspannung der Dispersionen kann so gewählt werden, dass die Dispersion mit welcher die anorganische, vorzugsweise keramische, Beschichtung aufgebracht wird aus diesen Senken übersteht und so die erfindungsgemäße Beschichtung erzeugt wird.

Die partielle anorganische, vorzugsweise keramische, Beschichtung wird vorzugsweise direkt auf die vorstehend hergestellte poröse BOPP Folie aufgetragen, so dass keine Vorbehandlung der Folie mit Haftvermittlern oder der Einsatz von Haftvermittlern in der zur Beschichtung eingesetzten anorganischen, vorzugsweise keramischen, Beschichtungsmasse notwendig ist.

Darüber hinaus hat sich gezeigt, dass insbesondere bei porösen BOPP Folien keine Nachbehandlung der Oberfläche der Folie, insbesondere der Seite der Folie die nachfolgend beschichtet werden soll, mit einer der bekannten Methoden wie Corona-, Plasma- oder Flamm-Behandlung notwendig ist und die anorganische, vorzugsweise keramische, Beschichtung direkt auf die unbehandelte poröse BOPP Folie aufgetragen werden kann. In einer weiteren Ausführungsform kann der Auftrag der partiellen Beschichtung auch nach einer Behandlung der Oberfläche mittels Corona, Flamme oder Plasma erfolgen.

Die Auftragsmenge an Dispersion beträgt vorzugsweise zwischen 0,5 g/m$^2$ und 20 g/m$^2$. Werden die Partikel als Dispersion aufgetragen wird die frisch beschichtet poröse BOPP Folie mittels handelsüblicher Trockner getrocknet, wobei der ggf. anwesende Binder aushärtet. Die Trocknung wird üblicherweise bei Temperaturen zwischen 50°C und 140°C durchgeführt. Die Trocknungszeiten betragen hierbei zwischen 30 Sekunden und 60 Minuten.

Mittels der vorliegenden Erfindung kann eine Folie zur Verfügung gestellt werden, die sich auf Grund der hohen Durchlässigkeit für die Anwendung in Hochenergiebatterien eignet und gleichzeitig die Anforderungen an die mechanischen Festigkeiten, insbesondere eine geringe Spleißneigung erfüllt sowie, die in dieser Anwendung benötigte thermische Stabilität.

Die Folie kann des Weiteren vorteilhaft in anderen Anwendungen eingesetzt werden, bei denen eine sehr hohe Durchlässigkeit gefordert wird oder sich vorteilhaft auswirken. Beispielsweise als hochporöser Separator in Batterien, insbesondere in Lithium-Batterien mit hoher Anforderung an die Leistung.

Die erfindungsgemäße partiell anorganisch, vorzugsweise keramisch, beschichtete Separatorfolie auf Basis von poröser Polyolefinfolie, umfasst eine poröse, biaxial orientierte Folie aus Polypropylen mit einer Porosität von 30 bis 80% und einer Durchlässigkeit von <1000s (Gurley Wert) und die Durchlässigkeit der erfindungsgemäßen Separatorfolien mit partieller anorganischer, vorzugsweise keramischer, Beschichtung beträgt < 1200s (Gurley Wert).

Erfindungsgemäß wird der Gurley Wert der porösen Folie durch die partielle Beschichtung nur geringfügig erhöht. Im Allgemeinen erhöht sich der Gurley Wert nach der partiellen Beschichtung um weniger als 1000 Gurley-Sekunden, vorzugsweise um 1 bis 600Gurley Sekunden, insbesondere um 3 bis 400Gurley-Sekunden, so daß die Durchlässigkeit der Folie im wesentlichen erhalten bleibt. Im Einzelnen wird die Auftragsmenge und der Beschichtungsgrad so gesteuert, daß die partielle Beschichtung den Gurley Wert nur um die vorstehend genannten Werte erhöht. In besonders vorteilhaften Ausführungsformen kann der Gurley Wert fast konstant bleiben, d.h. er erhöht sich nur um >0 bis 200 Gurley-Sekunden.

Insofern die erfindungsgemäße, partiell anorganisch, vorzugsweise keramisch, beschichtete Separatorfolien auf Basis von porösen Polyolefinfolien zusätzlich eine Abschaltfunktion aufweist, zeigt diese einen Gurley Wert von > 6000s, wenn, bzw. nach dem die beschichtete Separatorfolien für 5 Minuten über 140°C erhitzt wird.

Dass die Abschaltfunktion bildende Material, insbesondere das Polyethylen, ist in der erfindungsgemäß eingesetzten porösen BOPP Folie vorzugsweise in Mengen von mindestens 5 Gew.-% bezogen auf die vorhandenen Propylenpolymeren und/oder Propylenblockcopolymeren vorhanden, besonders bevorzugt in Mengen von mindestens 10 Gew.-%.

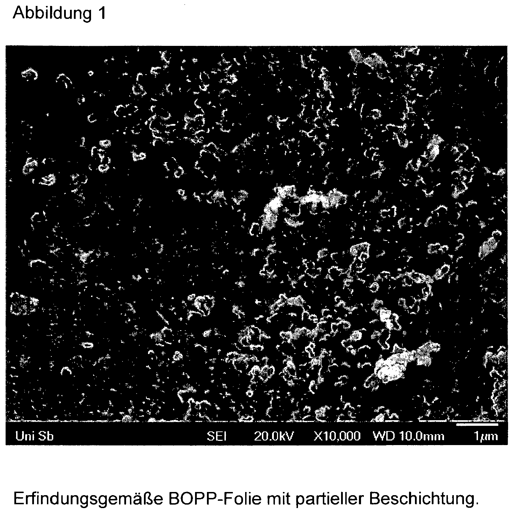

Abbildung 1 zeigt eine mikroskopische Aufnahme der erfindungsgemäßen, partiell beschichteten Separatorfolie auf Basis von porösen Polyolefinfolien.

Abbildung 2 zeigt einen Ausdruck einer mikroskopischen Aufnahme der erfindungsgemäßen, partiell beschichteten Separatorfolie auf Basis von porösen Polyolefinfolien, nach Sputtern mit Pt auf Fotopapier zur Bestimmung des Beschichtungsgrades. Die dunklen Bereiche stellen die unbeschichteten Bereiche dar, die hellen Bereiche stellen die beschichteten Bereiche dar.

Die auf der erfindungsgemäßen Separatorfolie vorhandene anorganische, vorzugsweise keramische, Beschichtung zeigt ein gutes Haftverhalten, wobei diese ohne Einsatz von Haftvermittlern erzielt wird.

Überraschenderweise zeigt sich die gute Haftung zwischen Folie und Beschichtung auch ohne eine Corona-, Flamm- oder Plasmabehandlung, wobei grundsätzlich die Haftung durch diese Maßnahme weiter verbessert werden kann.

Überraschenderweise haften die Partikel auch ausreichend auf der porösen Folie, wenn der Auftrag nicht aus einer Dispersion erfolgt, sondern die Partikel direkt aufgetragen werden. Auch in diesen trockenen Verfahren ist die Behandlung der Oberfläche mittels Corona, Flamem oder Plasma nicht erforderlich, aber möglich.

Zur Charakterisierung der Rohstoffe und der Folien wurden die folgenden Meßmethoden benutzt:

Partikelgrößen-Definition und Bestimmung:

Die Bestimmung der durchschnittlichen Partikeldurchmesser bzw. der mittleren Korngröße (= d50 bzw. d90) erfolgt durch ein Laserlichtstreuungsverfahren nach ISO 13320-1. Ein geeignetes Messgerät zur Partikelgrößenanalyse ist beispielsweise ein Microtrac S 3500.

Beschichtungsgrad:

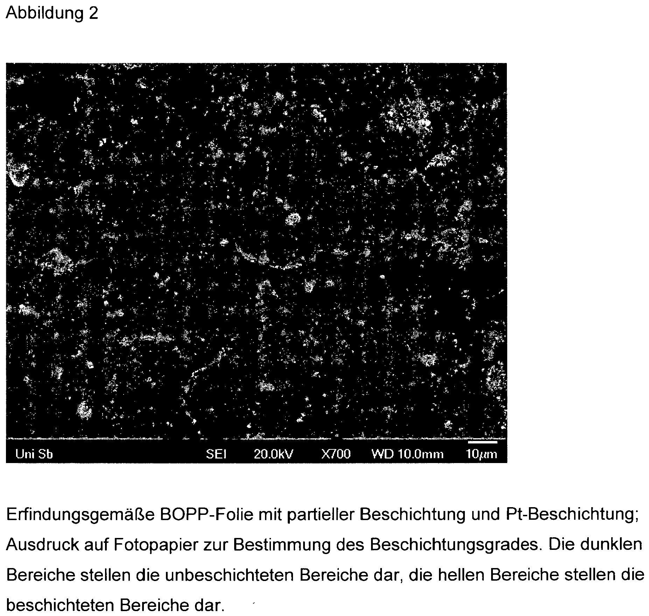

Aus einer beschichteten Folie wird eine Probe 5 x 5mm ausgeschnitten und im Vakuum mit Pt-Besputtert (4 nm Schichtdicke) und anschließend im Raster-Elektronen Mikroskop (JEOL JSM-7000F) untersucht. Mit einer Vergrößerung von 550-fach wird ein Bereich von 200 x 200 $\mu$m abgebildet.
Beschleunigungsspannung war 20 kV (Sekundärelektronen Bild)
Bei dieser Vergrößerung sind die mit Partikeln beschichteten und die unbeschichteten Bereiche der Folie gut sichtbar. Die Aufnahmen werden auf Fotopapier ausgedruckt und mit der Schere beschichtete und unbeschichtete Bereiche ausgeschnitten, voneinander getrennt und ausgewogen. Die dunklen Bereiche stellen die unbeschichteten Bereiche dar, die hellen Bereiche stellen die beschichteten Bereiche dar (vgl. Abbildung 2).
Der Beschichtungsgrad BG in Prozent wird aus den ermittelten Gewichten dann wie folgt Berechnet:

$$BG\ [\%] =\ 100 \times M_B / (M_U + M_B)$$

Wobei $M_B$ die Masse des Fotopapiers, dass die beschichteten Bereiche zeigt und $M_U$ die Masse des Fotopapiers mit den Bereichen ohne Beschichtung ist.

Schmelzflußindex

Der Schmelzflußindex der Propylenpolymeren wurde nach DIN 53 735 bei 2,16 kg Belastung und 230 °C gemessen.

Schmelzpunkt

Der Schmelzpunkt ist im Sinne der vorliegenden Erfindung das Maximum der DSC Kurve. Zur Bestimmung des Schmelzpunkts wird eine DSC-Kurve mit einer Aufheiz- und Abkühlgeschwindigkeit von 10K/1 min im Bereich von 20 bis 200°C aufgenommen. Für die Bestimmung des Schmelzpunkts wird wie üblich die zweite Aufheizkurve nachdem mit 10K/1 min im Bereich von 200 bis 20°C abgekühlt wurde ausgewertet.

ß-Gehalt und ß-Aktivität

Der Anteil des ß-kristallinen Polypropylens wird mittels DSC bestimmt. Diese Charakterisierung wird in J. o. Appl. Polymer Science, Vol. 74, p.: 2357-2368, 1999 von Varga beschrieben und folgendermaßen durchgeführt: Die mit dem ß-Nukleator additivierte Probe wird in der DSC zunächst mit einer Aufheizrate von 20°C/min auf 220°C erhitzt und aufgeschmolzen (1. Aufheizen). Danach wird sie mit einer Kühlrate von 10°C/min auf 100°C abgekühlt, bevor sie mit einer Heizrate von 10°C/min (2. Aufheizen) wieder aufgeschmolzen wird.
Aus der DSC Kurve des 1. Aufheizen wird aus dem Verhältnis der Schmelzenthalpien der ß-kristallinen Phase (Hß) zu der Summe der Schmelzenthalpien von ß- und $\alpha$-kristalliner Phase ($H_\beta$ + $H_\alpha$) der Kristallinitätsgrad $K_{\beta,DSC}$ (Anteil an ß-kristallinem Polypropylen) bestimmt, der in der vermessenen Probe vorliegt (unverstreckte Folie, Spritzgussteil). Der prozentuale Wert errechnet sich wie folgt:

$$K_{\beta,DSC}\ [\%] = 100 \times (H_\beta)/(H_\beta + H_\alpha)$$

Dieser Wert entspricht dem ß-Gehalt der Probe, z.B. ein Folien- oder ein Rohstoff-Muster
Aus der DSC Kurve des 2. Aufheizen wird aus dem Verhältnis der Schmelzenthalpien der ß-kristallinen Phase (Hß) zu der Summe der Schmelzenthalpien von ß- und $\alpha$-kristalliner Phase ($H_\beta$ + $H_\alpha$) der Kristallinitätsgrad $K_{\beta,DSC}$ (2. Aufheizen) bestimmt, der den ß-Anteil der jeweiligen Polypropylenprobe angibt, der maximal erreicht werden kann. Dieser Wert entspricht der ß-Aktivität der Probe.

Dichte

Die Dichte wird nach DIN 53 479, Verfahren A, bestimmt.

Bubble Point:

Der Bubble Point wurde nach der ASTM F316 gemessen.

Porosität

Als Porosität wird die Dichtereduzierung ($\rho_{Folie}$ - $\rho_{pp}$) der Folie gegenüber der Dichte des reinen Polypropylens $\rho_{pp}$ wie folgt berechnet:

$$\text{Porosität [\%]} = 100 \times (\rho_{pp} - \rho_{Folie}) / \rho_{pp}$$

Permeabilität / Durchlässigkeit (Gurley-Wert)

Die Permeabilität der Folien wurde mit dem Gurley Tester 4110, nach ASTM D 726-58 gemessen. Dabei wird die Zeit (in sec) bestimmt die 100 cm$^3$ Luft benötigen, um durch die Folienfläche von 1 Inch$^2$ (6,452 cm$^2$) zu permeieren. Die Druckdifferenz über der Folie entspricht dabei dem Druck einer Wassersäule von 12,4 cm Höhe. Die benötigte Zeit entspricht dann dem Gurley-Wert.

Rauigkeit:

Die Rauigkeit wurde als Rz- und Rmax-Wert in Anlehnung an DIN 4768 mit einem konfokal Lasermikroskop (Leica DCM 3D) bei einem cut-off von 2,5 mm bestimmt. Hierzu wurde eine Fläche von 500 $\mu$mx 500 $\mu$m ausgewertet

Einsprung:

Der Einsprung gibt die Breitenänderung der Folie während der Längsverstreckung an. Hierbei bezeichnet $B_0$ die Breite der Folie vor und $B_1$ entsprechend die Breite der Folie nach der Längsverstreckung. Die Längsrichtung ist die Maschinenrichtung, als Querrichtung wird entsprechend die Richtung quer zum Maschinenlauf definiert. Als Einsprung in % wird dann die Differenz der ermittelten Breiten im Verhältnis zur ursprünglichen Breite $B_0$ mal 100 angegeben.

$$\text{Einsprung B [\%]} = [(B_0 - B_1) / B_0] *100 \ [\%]$$

Haftverhalten:

Es wird mit einer Schablone ein beschichtetes Folienstück von 6x6 cm ausgeschnitten. Dieses Stück wird mit 3cm Überlappung auf einen Edelstahlwürfel mit Kantenradius: 0,5 mm der Größe 8 x 8 x 8cm mit 3cm Überlappung aufgelegt. Die überstehenden 3cm werden dann auf der Würfelkante rechtwinklig abgeknickt. Bei schlechter Haftung der Beschichtung platzt die Beschichtung von der Kante her ab und kann mit den Fingern abgerieben werden.
Bei guter Haftung entsteht höchstens ein Riss an der Biegekante, die Haftung auf der Folie bleibt aber erhalten.
Die Erfindung wird nunmehr durch die nachfolgenden Beispiele erläutert.

Beispiele:

Für die anorganische, vorzugsweise keramische, Beschichtung wurden sphärische Silikat- und TiO2-Partikel ausgesucht.
Herstellung der im Beispiel genannten Folien:

Folienbeispiel 1:

Calziumpimelat als Nukleierungsmittel wurde im Mischer in einer Konzentration von 0,04 Gew.-% mit Granulat aus isotaktischem Polypropylenhomopolymer (Schmelzpunkt 162°C; MFI 3g/10min) und einem Propylenblockcopolymer vermischt und in einem Zweischneckenextruder aufgeschmolzen (Gehäusetemperatur von 240°C und 200 1/min$^{-1}$) aufgeschmolzen. Nach dem Extrusionsverfahren wurde die Schmelze aus einer Breitschlitzdüse bei einer Extrusionstemperatur von 245 °C zu einer einschichtigen Folie extrudiert. Diese Folie hatte die folgende Zusammensetzung:

| | |
|---|---|
| ca. 50 Gew.-% | Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) und |
| ca. 49,96 Gew.-% | Propylen-Ethylen-Blockcopolymerisat mit einem Ethylenanteil von ca. 5 Gew.-% bezogen auf das Blockcopolymer und einem Schmelzflußindex (230°C und 2,16 kg) von 6 g/10min |
| 0,04 Gew.-% | nano Ca- Pimelat als ß-Nukleierungsmittel |

Die Folie enthielt zusätzlich Stabilisator und Neutralisationsmittel in üblichen Mengen.

Die Polymermischung wurde nach der Extrusion über eine erste Abzugswalze und ein weiteres Walzentrio abgezogen, abgekühlt und verfestigt, anschließend längsgestreckt, quergestreckt und fixiert, wobei im Einzelnen die folgenden Bedingungen gewählt wurden:

| | |
|---|---|
| Extrusion: Extrusionstemperatur 245 °C | |
| Abkühlwalze: | Temperatur 125°C, |
| Abzugsgeschwindigkeit: | 1,5 m/min (Verweilzeit auf der Abzugswalze: 55 sec) |
| ß-Gehalt der Vorfolie: | 72 % |
| Längsstreckung: | Streckwalze T = 90 °C |
| Längsstreckung um den | Faktor 4 |
| Querstreckung: | Aufheizfelder T = 145 °C |
| Streckfelder | T = 145 °C |
| Querstreckung um den | Faktor 4 |

Die so hergestellte poröse Folie war ca. 20 $\mu$m dick und wies eine Dichte von 0,30 g/cm$^3$ auf und zeigte ein gleichmäßiges weiß-opakes Aussehen. Die Porosität betrug 66% und der Gurley-Wert 180 s. Rauigkeit Rz der zu beschichtenden Oberfläche: 1, 88$\mu$m

Folienbeispiel 2:

Nach dem Extrusionsverfahren wurde aus einer Breitschlitzdüse bei einer Extrusionstemperatur von 240 bis 250°C °C eine einschichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Folie hatte die folgende Zusammensetzung:

Ca. 60 Gew.-% hochisotaktisches Propylenhomopolymerisat (PP) mit einer $^{13}$C-NMR Isotaktizität von 97% und einem n-heptanlöslichen Anteil von 2,5 Gew.-% (bezogen auf 100 % PP) und einem Schmelzpunkt von 165°C; und einem Schmelzflußindex von 2,5 g/10 min bei 230 °C und 2,16 kg Belastung (DIN 53 735) und

ca. 20 Gew.-% HDPE (High Density Polyethylen) mit einer Dichte von 0,954 (ISO 1183) und einem MFI von 0,4 g/10 min bei 190 °C und 2,16 kg Belastung (ISO 1133/D) bzw. 27 g/10 min bei 190 °C und 21,6 kg Belastung (ISO 1333/G) und Schmelzpunkt von 130°C (DSC: Peak bei 10 °C/min Heizrate), der Schmelzebereich beginnt bei 125°C.

ca. 20 Gew.-% Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und 0,04 Gew.-% Ca-Pimelat als ß-Nukleierungsmittel.

Die Folie enthielt zusätzlich Stabilisator und Neutralisationsmittel in den geringen üblichen Mengen.

Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im einzelnen die folgenden Bedingungen gewählt wurden:

| | |
|---|---|
| Extrusion: | Extrusionstemperatur 235 °C |
| Abzugswalze: | Temperatur 125°C, |
| Abzugsgeschwind igkeit: | 4m/min |
| ß-Gehalt der Vorfolie: | 66 % |

(fortgesetzt)

| Längsstreckung: | Streckwalze T = 90 °C |
|---|---|
| Längsstreckung um den | Faktor 3.0 |
| Querstreckung: | Aufheizfelder T = 125 °C |
| Streckfelder | T = 125 °C |
| Querstreckung um den | Faktor 5.0 |
| Fixierung: | T = 125 °C |

Die so hergestellte poröse Folie war ca. 25 $\mu$m dick und wies eine Dichte von 0,38 g/cm$^3$ auf und zeigte ein gleichmäßiges weiß-opakes Aussehen. Rauigkeit Rz: 2,05 $\mu$m der zu beschichtenden Oberfläche

Tabelle 1: Zusammensetzung Anorganische Coatings

| | Partikel | Partikelgröße (REM Aufnahme) | Partikel WT.% | Wasser% | Isopropanol % | PVDC Binder |
|---|---|---|---|---|---|---|
| Coat.1 | TiO2 | 100-300 nm | 100 | - | - | - |
| Coat. 2 | Sphärisches Silikat (SiO)2 | 1-10 $\mu$m | 100 | - | - | - |
| Coat. 3 | TiO2 | 100-300 nm | 20 | - | 80 | - |
| Coat. 4 | Sphärisches Silikat (SiO2) | 1-10 $\mu$m | 58 | 17 | 8 | 17 |
| Coat. 5 | TiO2 | 100-300 nm | 47 | 23 | 12 | 18 |

Beispiel 1:

Auf eine mikroporöse BOPP Folie (Folienbeispiel 1) wurde mit einer Gummirakel pulverförmiges TiO2-Pigment (Tab. 1, Coating 1) aufgetragen. Die Beschichtung zeigt eine gute Haftung auf der Folie. Anschließend wurden über ausweigen das Auftragsgewicht des Coatings und die Luftdurchlässigkeit anhand des Gurley-Wertes bestimmt. REM-Aufnahmen zeigen die mit den Partikeln befüllten partiellen Bereiche auf der Folie. Es wird nur geringer Anstieg des Gurley-Wertes beobachtet.

Beispiel 2:

Auf eine mikroporöse BOPP Folie (Folienbeispiel 2) wurde mit einer Gummirakel pulverförmiges TiO2-Pigment (Tab. 1, Coating 1) aufgetragen. Die Beschichtung zeigt eine gute Haftung auf der Folie. Anschließend wurden über ausweigen das Auftragsgewicht des Coatings und die Luftdurchlässigkeit anhand des Gurley-Wertes bestimmt. REM-Aufnahmen zeigen die mit den Partikeln befüllten partiellen Bereiche auf der Folie. Es wird nur ein geringer Anstieg des Gurley-Wertes beobachtet.

Beispiel 3:

Auf eine mikroporöse BOPP Folie (Folienbeispiel 1) wurde mit einer Drahtrakel (Drahtdurchmesser: 0,3 mm) eine Dispersion von TiO2 in Isopropanol aufgetragen (Tab. 1, Coating 3). Nach 30 min bei 90°C im Trockenschrank getrocknet, wurde über auswiegen das Auftragsgewicht des Coatings und die Luftdurchlässigkeit anhand des Gurley-Wertes bestimmt. Es wird nur ein geringer Anstieg des Gurleywertes beobachtet. REM-Aufnahmen zeigen die mit den Partikeln befüllten partiellen Bereiche auf der Folie.

Beispiel 4:

Auf eine mikroporöse BOPP Folie (Folienbeispiel 2) wurde mit einer Drahtrakel (Drahtdurchmesser: 0,3 mm) eine Dispersion von TiO2 in Isopropanol aufgetragen (Tab. 1, Coating 3). Nach 30 min bei 90°C im Trockenschrank getrocknet wurde über ausweigen das Auftragsgewicht des Coatings und die Luftdurchlässigkeit anhand des Gurley-Wertes bestimmt. Es wird lediglich ein geringfügiger Anstieg des Gurleywertes beobachtet. REM-Aufnahmen zeigen die mit den Partikeln partiell beschichtete Bereiche auf der Folie.

Beispiel 5:

Auf eine mikroporöse BOPP Folie (Folienbeispiel 1) wurde mit einer Drahtrakel (Drahtdurchmesser: 0,3 mm) eine Dispersion von SiO2 und PVDC-Binder in Wasser und Isopropanol aufgetragen (Tab. 1, Coating 4). Nach 30 min bei 90°C im Trockenschrank getrocknet wurde über ausweigen das Auftragsgewicht des Coatings und die Luftdurchlässigkeit anhand des Gurley-Wertes bestimmt. Es wird lediglich ein geringfügiger Anstieg des Gurleywertes beobachtet. REM-Aufnahmen zeigen die mit den Partikeln befüllten partiellen Bereiche in der Folie.

Beispiel 6:

Auf eine mikroporöse BOPP Folie (Folienbeispiel 1) wurde mit einer Drahtrakel (Drahtdurchmesser: 0,3 mm) eine Dispersion von TiO2 und PVDC-Binder in Wasser und Isopropanol aufgetragen (Tab. 1, Coating 5). Nach 30 min bei 90°C im Trockenschrank getrocknet wurde über ausweigen das Auftragsgewicht des Coatings und die Luftdurchlässigkeit anhand des Gurley-Wertes bestimmt. Es wird lediglich ein geringfügiger Anstieg des Gurleywertes beobachtet. REM-Aufnahmen zeigen die mit den Partikeln befüllten partiellen Bereiche in der Folie.

Beispiel 7 (Vergleich):

Auf einen kommerziell erhältlichen mikroporösen Separator der Fa. Celgard (C200) wurde mit einer Gummirakel pulverförmiges TiO2-Pigment (Tab. 1, Coating 1) aufgetragen. Die Haftung wurde mit dem vorstehend beschrieben Haftungstest geprüft. Das Pulver zeigt keine Haftung auf der Folie.

Beispiel 8 (Vergleich):

Auf dem Separator der Fa. Celgard (C200) wurde mit einer Drahtrakel (Drahtdurchmesser: 0,3 mm) eine Dispersion von TiO2 in Isopropanol aufgetragen (Tab. 1, Coating 3). Nach 30 min bei 90°C im Trockenschrank getrocknet. Die Haftung wurde mit dem vorstehend beschrieben Haftungstest geprüft. Das Pulver zeigt keine Haftung und fällt ab.

Beispiel 9 (Vergleich):

Auf einen anderen kommerziell erhältlichen Polyolefin Separator der Fa. UBE wurde mit einer Gummirakel pulverförmiges TiO2-Pigment (Tab. 1, Coating 1) aufgetragen. Die Haftung wurde mit dem vorstehend beschrieben Haftungstest geprüft. Das Pulver zeigt keine Haftung auf der Folie.

Beispiel 10 (Vergleich):

Auf den Polyolefin Separator der Fa. UBE wurde mit einer Drahtrakel (Drahtdurchmesser: 0,3 mm) eine Dispersion von TiO2 in Isopropanol aufgetragen (Tab. 1, Coating 3). Nach 30 min bei 90°C im Trockenschrank getrocknet. Die Haftung wurde mit dem vorstehend beschrieben Haftungstest geprüft. Das Pulver zeigt keine Haftung und fällt ab.

Tabelle. 2:

| | Separator/ Folien Typ | Coating Rezeptur | Gurley vor Coating | Gurley nach Coating | Auftrags- gewicht / g/m$^2$ | Haftung* | % Beschichtung |
|---|---|---|---|---|---|---|---|
| Bsp. 1 | Folienbeispiel 1 | Coat. 1 | 230 | 240 | 2,9 | ja | 55 |
| Bsp. 2 | Folienbeispiel 2 | Coat. 1 | 220 | 230 | 2,1 | ja | 40 |
| Bsp. 3 | Folienbeispiel 1 | Coat. 3 | 230 | 260 | 5,2 | ja | 70 |
| Bsp. 4 | Folienbeispiel 2 | Coat. 1 | 220 | 310 | 3,8 | ja | 50 |
| Bsp. 5 | Folienbeispiel 1 | Coat. 4 | 230 | 250 | 4,2 | ja | 85 |
| Bsp.6 | Folienbeispiel 1 | Coat. 5 | 230 | 245 | 3,8 | ja | 80 |

(fortgesetzt)

| | Separator/ Folien Typ | Coating Rezeptur | Gurley vor Coating | Gurley nach Coating | Auftrags- gewicht / g/m$^2$ | Haftung* | % Beschichtung |
|---|---|---|---|---|---|---|---|
| Bsp. 7 (V) | Celgard C 200 | Coat. 1 | 620 | 620 | 0 | Keine | 4 |
| Bsp. 8 (V) | Celgard C 200 | Coat. 3 | 620 | 620 | 0 | Keine | 3 |
| Bsp. 9 (V) | UBE 3014 | Coat. 1 | 540 | 540 | 0 | Keine | 4 |
| Bsp. 10 (V) | UBE 3014 | Coat. 3 | 540 | 540 | 0 | Keine | 4 |
| * Die Haftung wurde mittels des vorstehend beschrieben Tests "Haftverhalten" bestimmt. | | | | | | | |

**Patentansprüche**

1. Biaxial orientierte, ein- oder mehrschichtige poröse Folie, welche mindestens eine poröse Schicht umfasst und diese Schicht mindestens ein Propylenpolymer enthält, wobei

   (i) die Porosität der porösen Folie 30% bis 80% beträgt und
   (ii) die Durchlässigkeit der porösen Folie <1000s (Gurley Wert) beträgt, **dadurch gekennzeichnet, dass**
   (iii) die poröse Folie eine partielle anorganische, vorzugsweise keramische, Beschichtung aufweist und 10 bis 95% der gesamten Oberfläche auf einer Seite der Folie mit-der anorganischen, vorzugsweise keramischen, Beschichtung versehen sind,
   (iv) die beschichtete poröse Folie einen Gurley Wert von <1200s aufweist und
   (v) die Porosität durch Umwandlung von ß-kristallinem Polypropylen beim Verstrecken der Folie erzeugt wird, wobei mindestens ein ß-Nukleierungsmittel in der Folie vorliegt und
   (vi) die Folie 50 bis 85 Gew.-% Propylenhomopolymer und 15 bis 50 Gew.-% Propylenblockcopolymere, aufweist und 50 bis 10.000ppm ß-Nukleierungsmittel enthält.

2. Folie nach Anspruch 1, **dadurch gekennzeichnet, dass** nur bis zu 95%, vorzugsweise 10 bis 95%, insbesondere 25 bis 90%, der gesamten Oberfläche auf einer Seite der Folie, vorzugsweise auf beiden Seiten der Folie, mit-der anorganischen, vorzugsweise keramischen, Beschichtung versehen sind.

3. Folie nach Anspruch 1, **dadurch gekennzeichnet, dass** die poröse Folie eine ß-Aktivität von 35% bis 99% aufweist.

4. Folie nach einem der Ansprüche 1 bis 3, **dadurch gekennzeichnet, dass** das ß-Nukleierungsmittel γ-Quinacridone, Dihydroquinacridine, Dicarboxamide oder ein Calciumsalz der Dicarbonsäuren, vorzugsweise ein Calciumsalz der Phtalsäure, ein Calciumsalz der Pimelinsäure und/oder der Suberinsäure, und/oder ein nanoskaliges Eisenoxid umfasst, vorzugsweise ist das ß-Nukleierungsmittel ein zweikomponentiges ß-Nukleierungssystem aus Calciumcarbonat und organischen Dicarbonsäuren

5. Folie nach Anspruch 4, **dadurch gekennzeichnet, dass** die Folie weitere Polyolefine in einer Menge von 0 bis <10 Gew.-%, vorzugsweise 0 bis 5 Gew.-%, insbesondere 0,5 bis 2 Gew.-%, enthält und der Anteil des Propylenhomopolymeren oder des Blockcopolymeren entsprechend reduziert wird.

6. Folie nach einem der Ansprüche 1 bis 5, **dadurch gekennzeichnet, dass** die Folie zusätzlich eine Abschaltfunktion aufweist und die beschichtete Folie einen Gurley Wert von > 6000s aufweist, nach dem diese für 5 Minuten über 140°C erhitzt wird.

7. Folie nach Anspruch 6, **dadurch gekennzeichnet, dass** die poröse Schicht ein Material enthält, welches der porösen Folien eine Abschaltfunktion verleiht und das Material ein Polyethylene, bevorzugt HDPE oder MDPE, umfasst, wobei das die Abschaltfunktion bildende Material, in Mengen von mindestens 5 Gew.-% bezogen auf die vorhandenen Propylenpolymeren und/oder Propylenblockcopolymeren, vorhanden ist.

**8.** Folie nach einem der Ansprüche 1 bis 7, **dadurch gekennzeichnet, dass** die Dichte der Folie in einem Bereich 0,1 bis 0,6 g/cm$^3$ liegt.

**9.** Folie nach einem der Ansprüche 1 bis 8, **dadurch gekennzeichnet, dass** das die Folie eine Dicke von 10 bis 100$\mu$m aufweist.

**10.** Folie nach einem der Ansprüche 1 bis 9, **dadurch gekennzeichnet, dass** die anorganische, vorzugsweise keramische, Beschichtung anorganische, vorzugsweise keramische, Partikel umfasst, deren Partikelgröße ausgedrückt als D50 Wert im Bereich zwischen 0,005 und 10$\mu$m, vorzugweise im Bereich 0,01 bis 7$\mu$m, liegt.

**11.** Folie nach Anspruch 10, **dadurch gekennzeichnet, dass** die anorganischen, vorzugsweise keramischen, Partikel ein elektrisch nichtleitendes Oxid der Metalle Al, Zr, Si, Sn, Ti und/oder Y umfasst.

**12.** Hochenergie- oder Hochleistungssystemen, insbesondere in Lithium-, Lithiumionen-, Lithium-Polymer-, und Erdalkali-Batterien, enthaltend eine Folie nach einem der Ansprüche 1 bis 11.


**Claims**

**1.** A biaxially orientated, single or multilayer porous film which comprises at least one porous layer, and this layer contains at least one propylene polymer, wherein

  (i) the porosity of the porous film is 30 % to 80 %, and
  (ii) the permeability of the porous film is <1000 s (Gurley value), **characterized in that**
  (iii) the porous film has a partial inorganic, preferably ceramic lamination and 10 % to 95 % of the entire surface on one side of the film is provided with the inorganic, preferably ceramic lamination,
  (iv) the laminated porous film has a Gurley value of <1200 s, and
  (v) the porosity is produced by transforming β-crystalline polypropylene when stretching the film, wherein at least one β-nucleation agent is present in the film, and
  (vi) the film comprises 50 % to 95 % by weight of propylene homopolymer and 15 % to 50 % by weight of propylene block copolymers, and contains 50 to 10000 ppm of β-nucleation agent.

**2.** The film as claimed in claim 1, **characterized in that** only up to 95 %, preferably 10 % to 95 %, in particular 25 % to 90 % of the entire surface on one side of the film, preferably on both sides of the film, is provided with the inorganic, preferably ceramic lamination.

**3.** The film as claimed in claim 1, **characterized in that** the porous film has a β-activity of 35 % to 99 %.

**4.** The film as claimed in one of claims 1 to 3, **characterized in that** the β-nucleation agent comprises γ-quinacridone, dihydroquinacridine, dicarboxamide or a calcium salt of dicarboxylic acids, preferably a calcium salt of phthalic acid, a calcium salt of pimelic acid and/or suberic acid and/or a nanoscale iron oxide, and preferably, the β-nucleation agent is a two-component β-nucleation system formed by calcium carbonate and organic dicarboxylic acids.

**5.** The film as claimed in claim 4, **characterized in that** the film contains other polyolefins in a quantity from 0 to <10 % by weight, preferably 0 to 5 % by weight, in particular 0.5 % to 2 % by weight, and the proportion of the propylene homopolymer or of the block copolymers is reduced accordingly.

**6.** The film as claimed in one of claims 1 to 5, **characterized in that** the film additionally has a shutdown function and the laminated film has a Gurley value of >6000 s, after it has been heated for 5 minutes above 140°C.

**7.** The film as claimed in claim 6, **characterized in that** the porous layer contains a material which provides the porous films with a shutdown function and **in that** the material comprises a polyethylene, preferably HDPE or MDPE, wherein the material producing the shutdown function is present in quantities of at least 5 % by weight with respect to the propylene polymers and/or propylene block copolymers which are present.

**8.** The film as claimed in one of claims 1 to 7, **characterized in that** the density of the film is in the range 0.1 to 0.6 g/cm$^3$.

**9.** The film as claimed in one of claims 1 to 8, **characterized in that** the film has a thickness of 10 to 100 $\mu$m.

**10.** The film as claimed in one of claims 1 to 9, **characterized in that** the inorganic, preferably ceramic lamination comprises inorganic, preferably ceramic particles with a particle size, expressed in terms of the D50 value, in the range 0.005 to 10 μm, preferably in the range 0.01 to 7 μm.

**11.** The film as claimed in claim 10, **characterized in that** the inorganic, preferably ceramic particle comprises an electrically non-conductive oxide of the metals Al, Zr, Si, Sn, Ti and/or Y.

**12.** High energy or high performance systems, in particular in lithium, lithium ion, lithium polymer and alkaline-earth batteries, containing a film as claimed in one of claims 1 to 11.

**Revendications**

**1.** Feuille poreuse mono- ou multicouche à orientation biaxiale, laquelle comprend au moins une couche poreuse, et cette couche comprend au moins un polymère de propylène,

(i) la porosité de la feuille poreuse étant comprise entre 30 % et 80 %, et
(ii) la perméabilité de la feuille poreuse étant <1.000 s (indice de Gurley), **caractérisée en ce que**,
(iii) la feuille poreuse comporte un revêtement inorganique partiel, de préférence céramique, et la feuille est pourvue, sur l'une des ses faces, dudit revêtement inorganique, de préférence céramique, couvrant 10 à 95 % de la surface totale,
(iv) la feuille poreuse présente, avec son revêtement, un indice de Gurley <1.200 s, et
(v) la porosité est générée par transformation de polypropylène β-cristallin lors de l'orientation de la feuille, ladite feuille comportant un agent de β-nucléation, et
(vi) la feuille contient 50 à 85 % en poids d'homopolymère de propylène et 15 à 50 % en poids de copolymère à blocs de propylène et 50 à 10.000 ppm d'agents de nucléation β.

**2.** Feuille selon la revendication 1, **caractérisée en ce que** l'une des faces de ladite feuille, de préférence les deux faces de la feuille, est/sont pourvue(s) d'un revêtement inorganique, de préférence céramique, couvrant seulement jusqu'à 95 %, de préférence 10 à 95 %, notamment 25 à 90 % de la surface totale.

**3.** Feuille selon la revendication 1, **caractérisée en ce que** ladite feuille poreuse présente une activité β comprise entre 35 % et 99 %.

**4.** Feuille selon l'une des revendications 1 à 3, **caractérisée en ce que** ledit agent de nucléation β comprend des γ-quinacridones, des dihydrochinacridines, des dicarboxamides ou un sel de calcium d'acides dicarboxyliques, de préférence un sel de calcium de l'acide phtalique, un sel de calcium de l'acide pimélique et/ou de l'acide subérique et/ou un oxyde de fer à l'échelle nano, ledit agent de nucléation β étant préférentiellement un système de nucléation β à deux composants constitué de carbonate de calcium et d'acides dicarboxyliques organiques.

**5.** Feuille selon la revendication 4, **caractérisée en ce que** ladite feuille contient d'autres polyoléfines dans une quantité comprise entre 0 et <10 % en poids, de préférence entre 0 et 5 % en poids, notamment entre 0,5 et 2 % en poids, la proportion dudit homopolymère de propylène ou dudit copolymère à blocs étant réduite de manière correspondante.

**6.** Feuille selon l'une des revendications 1 à 5, **caractérisée en ce que** la feuille comporte en outre une fonction d'arrêt et la feuille présente, avec son revêtement, un indice de Gurley de >6.000 s, après avoir été réchauffée à 140 °C pendant 5 minutes.

**7.** Feuille selon la revendication 6, **caractérisée en ce que** la couche poreuse contient un matériau conférant à la feuille poreuse une fonction d'arrêt et ledit matériau comprend un polyéthylène, de préférence du PE-HD ou du PE-MD, le matériau qui établit la fonction d'arrêt étant présent dans des quantités d'au moins 5 % en poids, par rapport aux polymères de propylène et/ou aux copolymères à blocs de propylène qui sont présents.

**8.** Feuille selon l'une des revendications 1 à 7, **caractérisée en ce que** la densité de ladite feuille est comprise entre 0,1 et 0,6 g/cm$^3$.

**9.** Feuille selon l'une des revendications 1 à 8, **caractérisée en ce que** ladite feuille présente une épaisseur comprise entre 10 et 100 $\mu$m.

**10.** Feuille selon l'une des revendications 1 à 9, **caractérisée en ce que** le revêtement inorganique, de préférence céramique, comprend des particules inorganiques, de préférence céramiques, la taille desdites particules, exprimée en tant que valeur D50, étant comprise entre 0,005 et 10 $\mu$m, de préférence entre 0,01 et 7 $\mu$m.

**11.** Feuille selon la revendication 10, **caractérisée en ce que** les particules inorganiques, de préférence céramiques, comprennent un oxyde des métaux Al, Zr, Si, Sn, Ti et/ou Y qui constitue un isolant électrique.

**12.** Système à haut niveau d'énergie ou à haute performance, notamment dans des batteries de type lithium, lithium-ion, lithium-polymère et alcalino-terreux, contenant une feuille selon l'une des revendications 1 à 11.

Abbildung 1

Uni Sb    SEI    20.0kV    X10,000    WD 10.0mm    1μm

Erfindungsgemäße BOPP-Folie mit partieller Beschichtung.

Abbildung 2

Erfindungsgemäße BOPP-Folie mit partieller Beschichtung und Pt-Beschichtung; Ausdruck auf Fotopapier zur Bestimmung des Beschichtungsgrades. Die dunklen Bereiche stellen die unbeschichteten Bereiche dar, die hellen Bereiche stellen die beschichteten Bereiche dar.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010048395 A
- US 2011171523 A
- US 2007020525 A
- DE 19838800
- DE 10208277
- WO 2005038946 A
- US 4794136 A
- EP 1173330 A
- DE 102010018374 A
- DE 3610644
- DE 4420989
- EP 0557721 A
- WO 2011047797 A1
- DE 10208277 A

**In der Beschreibung aufgeführte Nicht-Patentliteratur**

- *Diese Charakterisierung wird in J. o. Appl. Polymer Science,* 1999, vol. 74, 2357-2368